# FASCICULE DE BREVET EUROPEEN

(11) **EP 3 356 295 B1**
(45) Date de publication et mention de la délivrance du brevet: **13.03.2019**
(21) Numéro de dépôt: 17737265.3
(22) Date de dépôt: 07.07.2017
(51) Int. Cl.: C01F 5/14, C01F 5/16, C01F 11/00, C01F 11/02, C04B 18/02, C22B 1/24, C22B 1/242, C22B 1/243, C22B 1/244, C22B 1/245, C04B 111/00

(54) **BRIQUETTES CUITES CONTENANT UN COMPOSE CALCO-MAGNESIEN VIF ET DES FERRITES DE CALCIUM ET LEUR PROCEDE DE FABRICATION**
GEBRANNTE BRIKETTS MIT EINER GEBRANNTEN CALCIUM-MAGNESIUM-VERBINDUNG UND CALCIUMFERRITEN SOWIE VERFAHREN ZUR HERSTELLUNG DAVON
BAKED BRIQUETTES CONTAINING A BURNT CALCIUM-MAGNESIUM COMPOUND AND CALCIUM FERRITES, AND METHOD FOR MANUFACTURING SAME

(30) Priorité: 08.07.2016 BE 201605575
(43) Date de publication de la demande: 08.08.2018
(73) Titulaire: S.A. Lhoist Recherche et Développement, 1342 Ottignies-Louvain-la-Neuve (BE)
(72) Inventeur: CRINIERE, Guillaume, 1420 Braine-l'Alleud (BE); NISPEL, Michael, 1348 Louvain-la-Neuve (BE)
(74) Mandataire: Calysta NV
(86) Numéro de dépôt international: PCT/EP2017/067135
(87) Numéro de publication internationale: WO 2018/007607

(56) Documents cités:
- EP-A1- 2 199 417
- EP-A1- 3 042 965
- WO-A1-03/012154
- WO-A1-2015/007661
- US-A- 3 649 248
- US-A- 5 186 742
- BARNETT THOMAS P: "Roll-press briquetting: Compacting fines to reduce waste-handling costs", POWDER AND BULK ENGINEERING, C S C PUBLISHING, INC, US , vol. 24, no. 10 octobre 2010 (2010-10), pages 1-6, XP002742275, ISSN: 1938-9140 Extrait de l'Internet: URL:http://www.powderbulk.com/wp-content/u ploads/pdf/pbe_201010_058.pdf [extrait le 2015-07-15] cité dans la demande
- E A S GARICA ET AL: "PELOTIZAÇÃO DE FINOS DE CALCÁRIO UTILIZANDO ÁGUA E CAL VIRGEM COMO AGENTES AGLOMERANTES AGLOMERANTES", XXVI ENCONTRO NACIONAL DE TRATAMENTO DE MINÉRIOS E METALURGIA EXTRATIVA, vol. 1, 2015, pages 59-67, XP055349510, Poços de Caldas

## Description

La présente invention se rapporte à une composition sous forme de briquettes cuites contenant un composé calco-magnésien vif et des ferrites de calcium, son procédé de fabrication, à ainsi qu'à son utilisation.

Par les termes composé calco-magnésien vif, on entend au sens de la présente invention une matière solide minérale dont la composition chimique est principalement de l'oxyde de calcium et/ou de l'oxyde de magnésium. Les composés calco-magnésiens vifs au sens de la présente invention comprennent donc la chaux vive (chaux calcique), la chaux magnésienne vive, la chaux dolomitique vive ou de la dolomie calcinée vive. Les composés calco-magnésiens vifs contiennent des impuretés, à savoir, des composés tels de la silice, SiO₂ ou encore de l'alumine, Al₂O₃, etc..., à hauteur de quelques pour-cents. Il est entendu que ces impuretés sont exprimées sous les formes précitées mais peuvent en réalité apparaître sous des phases différentes. Elle contient également en général quelques pour-cents de CaCO₃ résiduel ou MgCO₃, appelés incuits, et quelques pour-cents de Ca(OH)₂ ou Mg(OH)₂ résiduels, du fait de l'hydratation partielle des produits vifs lors des phases de refroidissement, de manipulation et/ou de stockage.

On entend par chaux vive, une matière solide minérale, dont la composition chimique est principalement de l'oxyde de calcium, CaO. La chaux vive est communément obtenue par calcination de calcaire, principalement constitué de CaCO₃. La chaux vive contient des impuretés, à savoir, des composés tels de l'oxyde de magnésium, MgO, de la silice, SiO₂ ou encore de l'alumine, Al₂O₃, etc..., à hauteur de quelques pour-cents. Il est entendu que ces impuretés sont exprimées sous les formes précitées mais peuvent en réalité apparaître sous des phases différentes. Elle contient également en général quelques pour-cents de CaCO₃ résiduel, appelés incuits, et quelques pour-cents de Ca(OH)₂ résiduel, du fait de l'hydratation partielle de l'oxyde de calcium CaO lors des phases de refroidissement, de manipulation et/ou de stockage.

Selon la présente invention, on entend par le terme «briquette» un compact ayant une forme oblongue, présentant une masse d'environ 5 à 100 g par briquettes, inscrit dans un ellipsoïde de révolution aplati ou allongé (en anglais oblate ellipsoid of revolution or prolate ellipsoid of revolution). Typiquement, les briquettes présentent une forme de savonnette ou sont qualifiées de briquettes « oeuf » (en anglais « egg briquettes »)

Par opposition, on distingue les tablettes qui sont typiquement sous forme de pastilles, telles que produites par les presses « Titan » de la société « Eurotab ». Par définition, les tablettes à usage industriel sont de formes régulières, plus particulièrement sous forme de cylindre de faible hauteur.

Des briquettes sont connues de l'état de la technique, voir par exemple le document WO2015007661. Selon ce document, des compacts (à savoir des briquettes ou des tablettes) sont décrits comprenant des particules de composé calco-magnésien comprenant au moins 50% de composé calco-magnésien vif. Les compacts (sous forme de briquettes ou de tablettes) divulgués peuvent aussi contenir des additifs, en particulier de l'oxyde de fer.

Selon ce document, la résistance mécanique à la chute est mesurée au moyen d'un Shatter test. Les compacts décrits présentent de manière générale un indice de Shatter test inférieur à 10%.

Par les termes « indice de Shatter test », on entend au sens de la présente invention, le pourcentage massique des fines inférieures à 10 mm générées à l'issue de 4 chutes de 2 m au départ de 10kg de produit. Ces fines sont quantifiées au moyen d'un tamisage au travers un crible à mailles carrées de 10 mm à l'issue des 4 chutes de 2 m.

Une analyse détaillée des exemples et contre-exemples de ce document indique que des tablettes crues présentant une résistance mécanique à la chute améliorée ont été obtenues à l'aide d'au moins 50% de produits vifs, et que ces tablettes présentent également une résistance au vieillissement en atmosphère humide. Par contre, lorsque des briquettes de composés vifs sont obtenues à l'aide de composés vifs, l'indice de Shattertest représentant la résistance mécanique reste élevé (entre 13 et 15%) et il est nécessaire de réaliser un traitement thermique si l'on veut atteindre un indice de Shatter test inférieur à 10%.

Le document US5186742 divulgue des briquettes de chaux contenant de 55 à 85 % en poids de chaux, de 10 à 40% en poids de cendres et de 0,1 à 10% en poids de fibres de papier ainsi qu'éventuellement un lubrifiant. Les briquettes divulguées dans le document US 5186742 sont testées pour leur résistance à la chute, test qui n'est pas comparable au test permettant de mesure l'indice de Shatter test et présentent une résistance à la compression entre 150 et 300 livres (pounds), ce qui correspond à un indice de Shatter test bien supérieur à 10%.

Les composés calco-magnésiens s'utilisent dans de nombreuses industries, comme par exemple la sidérurgie, le traitement des gaz, le traitement des eaux et des boues, l'agriculture, l'industrie du bâtiment, les travaux publics et autres. Ils peuvent s'utiliser soit sous forme de galets ou de morceaux, soit sous forme de fines (d'une taille généralement inférieure à 7 mm). Dans certaines industries, la forme de galet est néanmoins préférée.

C'est le cas, par exemple, dans la sidérurgie, lors de l'adjonction de composés de calcium et de magnésium dans des convertisseurs d'oxygène ou bien des fours à arc électrique.

Durant la production de ces galets et morceaux, de nombreuses fines sont générées. Ces fines présentent typiquement un potentiel d'utilisation restreint car elles sont difficiles à transporter et à manipuler.

Depuis plusieurs années, l'objectif, dans nombre de secteurs, est de transformer des composés initialement sous forme de poudre en briquettes pour faciliter et sécuriser leur transport, leur manipulation et leur utilisation.

Les chaufourniers maintiennent toujours un équilibre des matières entre les composés calco-magnésiens en galet et les fines générées avant et pendant la calcination ainsi que lors des manipulations et opérations ultérieures. Néanmoins dans certains cas, un excédent de fines est produit. Ces fines peuvent alors être agglomérées les unes aux autres sous forme de briquettes ou similaires, ce qui donne non seulement la possibilité d'éliminer les fines en excédent mais également d'augmenter artificiellement la production de composés de calcium et de magnésium en galet en ajoutant ces briquettes ou analogues aux galets.

Le document de Barnett et al (Roll-press briquetting : Compacting fines to reduce waste-handling costs, powder and bulk engineering, vol.24, n° 10, octobre 2010, 1-6) décrit un procédé de fabrication de briquettes crues de chaux. Toutefois, ce document est muet quant aux conditions de production ainsi que sur les propriétés mécaniques de briquettes obtenues. Les briquettes à base d'excédent de fines ou analogues ont généralement une résistance mécanique inférieure à celle des composés de calcium et de magnésium en galet. Elles ont également une résistance au vieillissement pendant leur stockage ou leur manipulation qui est nettement inférieure à celle des composés de calcium et de magnésium en galet.

Cela explique le fait que dans la pratique, le briquetage des fines de composés de calcium et de magnésium ne soit pas très utilisé à l'heure actuelle. Compte tenu de la faible qualité des briquettes formées par ce type de procédé, on estime que le briquetage procure un rendement inférieur à 50 %, du fait de la présence d'un très grand nombre de briquettes inutilisables en sortie de ce type de procédé, qui nécessite une étape de recyclage.

Les lubrifiants et les liants sont des additifs souvent utilisés dans les procédés d'agglomération sous forme de briquettes ou similaires.

Les lubrifiants peuvent être de deux types, internes ou externes. Les lubrifiants internes sont mélangés intimement aux matériaux à briqueter. Ils favorisent d'une part la coulabilité du mélange lors de l'alimentation de la briqueteuse et d'autre part le réarrangement des particules au sein du mélange lors de la compression. Les lubrifiants externes sont appliqués sur les surfaces des rouleaux de la briqueteuse et aident principalement au démoulage. Dans les deux cas, ils réduisent le frottement sur la surface et donc l'usure. Les lubrifiants peuvent être des liquides tels que des huiles minérales, des silicones, etc. ou bien des solides tels que le talc, le graphite, les paraffines, les stéarates, etc. Dans le cas des compositions à base de composés calco-magnésiens vifs, les stéarates sont préférés et plus particulièrement le stéarate de calcium ou le stéarate de magnésium.

Les liants sont des substances ayant la propriété d'agglomérer les particules entre elles, soit par des forces d'adhésion, soit par une réaction chimique. Ils peuvent être d'origine minérale (ciments, argiles, silicates...), d'origine végétale ou animale (celluloses, amidons, gommes, alginates, pectine, colles,...), d'origine synthétique (polymères, cires,...). Dans bien des cas, ils sont utilisés et mis en oeuvre avec de l'eau qui active leurs propriétés d'agglomération.

Au fil des années, on a utilisé plusieurs de ces additifs pour augmenter la résistance et la durabilité des briquettes ou similaires de composés de calcium et de magnésium (calco-magnésien), par exemple le stéarate de calcium ou les fibres de papier (voir par exemple US5186742), mais sans que cela conduise à des améliorations suffisantes. D'ailleurs, dans de nombreux cas, l'utilisation des additifs actuellement employés pour d'autres produits industriels façonnés est limitée, comme c'est le cas notamment pour la fabrication des briquettes de composés calco-magnésiens, soit parce que les composés calco-magnésiens réagissent violemment avec l'eau, soit à cause d'un effet potentiellement négatif de ces additifs sur l'usage final des briquettes de composés calco-magnésiens.

Dans de nombreux procédés de raffinage sidérurgique, une composition de composés calco-magnésiens vifs, comme de la chaux vive et/ou de la dolomie vive ainsi que de la ferraille sont introduites dans un convertisseur pour contrôler la cinétique et la chimie de la réaction de formation de laitier, en facilitant ainsi l'élimination des impuretés et en protégeant le revêtement réfractaire du four vis-à-vis d'une usure excessive.

Les composés calco-magnésiens vifs introduits flottent sur le bain de métal chaud en formant ainsi une interface.

Durant le raffinage, le métal fondu est introduit dans la cuve dans laquelle de la ferraille peut aussi être introduite.

Le métal fondu provenant de la fusion de composés métalliques comprend une teneur initiale en carbone typiquement de 40 à 45 kg par tonne de métal fondu et une teneur initiale en phosphore de 0,7 à 1,2 kg par tonne de métal fondu.

Les composés calco-magnésiens vifs sont chargés et flottent au-dessus du bain de métal fondu. De l'oxygène est insufflé pendant une période de temps prédéterminée, afin de brûler le carbone et d'oxyder directement et/ou indirectement les composés phosphorés, et le silicium. Durant l'insufflation, les composés calco-magnésiens sont immergés dans le bain de métal fondu et se dissolvent/fondent légèrement à l'interface avec le métal fondu, les composés calco-magnésiens flottant toujours.

Le laitier est la couche d'oxydes flottant au-dessus du bain et résulte de la formation de SiO₂ due à l'oxydation du silicium, de la formation d'autres oxydes (MnO et FeO) durant l'insufflation, de l'addition de composés calco-magnésiens vifs pour neutraliser l'action du SiO₂ sur le revêtement réfractaire et pour liquéfier et activer le laitier, et du MgO provenant de l'usure du revêtement réfractaire.

En fait, durant la conversion, il se produit une réaction métal/gaz dans laquelle le carbone est brûlé pour former du CO et du CO₂ gazeux. A la fin de la période prédéterminée de l'insufflation, la teneur en carbone est réduite à environ 0,5 kg par tonne de métal fondu, ce qui signifie environ 500 ppm.

A l'interface entre le métal fondu et les composés calco-magnésiens flottants, il se produit une réaction métal/laitier destinée à déphosphorer le métal fondu. A la fin de la réaction entre le laitier et le métal, la teneur en phosphore est d'environ 0,1 kg ou moins par tonne de métal fondu, ce qui signifie environ 100 ppm ou moins.

Si le métal est le fer et que le composé calco-magnésien est de la chaux calcique, la réaction chimique est la suivante :

5 FeO + 4 CaO + 2P ⇆ 4 CaO. P₂O₅ + 5 Fe

Le FeO (oxyde de fer) et le phosphore proviennent du métal chaud, tandis que le CaO est ajouté dans le convertisseur. Cette réaction est exothermique et le but est de déplacer l'équilibre vers le côté droit. Ceci peut être effectué par réduction de la température, fluidisation du laitier autant que possible, homogénéisation du bain métallique (effectuée par insufflation d'argon et/ou d'azote par le fond dans la plupart des cas), maintien de l'indice de basicité CaO/SiO₂ entre 3 et 6 (rapport en poids de l'oxyde de calcium à la silice qui est acide), maintien du niveau de magnésite à moins de 9 % dans le laitier, et création de quantités suffisantes de laitier.

La magnésite est typiquement présente dans le laitier et provient de l'usure du revêtement réfractaire, qui peut être réduite par l'addition contrôlée de dolomie vive. Toutefois, pour favoriser la cinétique de la réaction dans le laitier, le niveau de magnésite devrait être maintenu inférieur à 9 %.

Comme on peut le comprendre, le raffinage du métal chaud n'est pas si facile, et il faudrait réaliser son optimisation pour obtenir une quantité donnée de métal liquide, par action sur l'équilibre massique du métal, une analyse chimique donnée, par action sur l'équilibre massique de l'oxygène (réaction d'oxydation), et une température donnée à la fin de l'insufflation (action sur l'équilibre thermique).

La complexité de l'amélioration de la déphosphoration durant le raffinage de métal chaud est due, entre autres, au respect simultané des trois équilibres.

Un tel procédé de déphosphoration durant le raffinage est connu dans la technique d'après le document "Process for dephosphorization of steel in Linz Donawitz converter (BOF converter) by pellet addition" (IN01412MU2006 A).

Ce brevet se focalise sur l'amélioration de la déphosphoration lors d'un procédé dans un convertisseur par refroidissement du laitier dans la deuxième moitié du procédé.

Toutefois, malheureusement, le procédé divulgué requiert une étape additionnelle dans le procédé pour introduire les roches dans le convertisseur après le chargement des additifs minéraux et du caloporteur standard. Ceci augmente par conséquent la durée du procédé, ce qui ne constitue pas une solution acceptable pour l'industrie du raffinage, puisque chaque seconde au cours d'un tel procédé de raffinage est très coûteuse.

Un autre procédé d'élimination du phosphore est connu d'après le document Slag-Making Methods And Materials, brevet US 3 771999. Ce brevet se focalise sur l'amélioration de la déphosphoration dans le procédé utilisant un convertisseur, par utilisation de produits à base de chaux en briquettes ayant 0,5 à 15 % de CaCl₂, NaCl, KCl et/ou NaF₂.

De plus, l'addition à de la chaux de fondants tels que les oxydes de fer, les oxydes de manganèse, le carbone, CaF₂, l'oxyde de bore, durant le procédé de raffinage, s'est avérée dans l'état de la technique améliorer la qualité du procédé de raffinage, par exemple pour la déphosphoration du métal fondu.

Toutefois, l'addition de tels fondants crée typiquement une complexité additionnelle du procédé de raffinage.

Il existe donc un besoin de fournir des composés calco-magnésiens vifs contenant des fondants, en particulier des ferrites de calcium sous les formes ferrites mono-calcique et/ou di-calcique car ceux-ci participent à la formation du laitier.

Des briquettes de composés calco-magnésiens vifs contenant éventuellement des fondants sont connues. Toutefois, dans les composés calco-magnésiens connus, contenant des fondants, il est également rapporté un phénomène d'efflorescence problématique car l'insufflation entraîne alors les parties efflorées dans les fumées (voir US3649248). D'autres part, il est également apparu que lorsque de l'oxyde de fer est ajouté, celui-ci doit se transformer en ferrite, lequel joue alors un rôle dans l'accélération de la formation de laitier.

Toutefois, bien que cela semble simple sur papier, l'oxyde de fer transformé en ferrite reste bien souvent négligeable, ne jouant alors pas son rôle dans l'accélération de la formation de laitier, ce qui contraint les aciéristes à ajouter la chaux d'une part, éventuellement avec du fer et d'autre part du ferrite, éventuellement avec de la chaux.

La formation des ferrites de calcium demande des températures relativement élevées (typiquement 1200-1250°C) et des temps de traitement thermique assez longs (voir également US3649248). Les briquettes à base de chaux vive (dolomitique) et oxyde de fer décrits dans l'art antérieur ne conduisent donc pas facilement à la formation des ferrites de calcium.

Ainsi, lorsqu'un tel traitement thermique est mis en oeuvre en amont du convertisseur, le point de vue technico-économique est pénalisé (four spécifique, consommation énergétique, perte de capacité de production, frittage partiel, i.e. réduction de la surface spécifique et réduction du volume poreux).

Lorsque le traitement thermique est mis en oeuvre in-situ dans le convertisseur, la cinétique de formation des ferrites de calcium est trop lente et pénalise la performance de ces briquettes pour la déphosphoration.

Par conséquent, il n'existe pas encore actuellement un produit simple à utiliser, peu contraignant, et qui minimise la perte de chaux.

La présente invention vise à résoudre au moins une partie de ces inconvénients en mettant à disposition un procédé permettant de réduire considérablement la perte de chaux et d'améliorer l'efficacité de la chaux dans la formation du laitier.

Pour résoudre ce problème, il est prévu suivant l'invention une composition sous forme de briquettes cuites, comprenant un composé calco-magnésien vif, préférentiellement sous forme de chaux vive et un composé à base de fer sous forme de ferrite de calcium, dans laquelle ledit ferrite de calcium forme une matrice dans laquelle sont dispersées des particules de composé calco-magnésien vif.

Ladite matrice doit être comprise comme étant une phase continue à base de ferrite de calcium dans laquelle sont dispersées des particules de composé calco-magnésien vif, en particulier de chaux vive. On distingue le cas où lesdites particules de composé calco-magnésien vif sont de petite taille de sorte qu'elles se fondent visuellement dans la matrice à base de ferrite de calcium du cas où des particules de composé calco-magnésien vif sont de plus grande taille apparaissant comme des inclusions de composé calco-magnésien vif dans ladite matrice.

Concrètement, on matérialise la distinction précitée en ayant recours à une coupe d'une briquette selon l'invention, sur laquelle on pratique une microscopie électronique à balayage couplées à une analyse dispersive en énergie. Ce faisant, on visualise en deux dimensions (la surface de la coupe) un objet initialement en trois dimensions (la briquette) mais aussi les particules qui composent la briquette. Ainsi, les particules de composé calco-magnésien apparaissent-elles également en deux dimensions sur le plan de coupe. Comme il est d'usage d'assimiler des particules en trois dimensions à des sphères et de déterminer leur taille par le diamètre de la sphère équivalente (taille « tridimensionnelle »), on assimile dans la présente invention la surface de coupe de la particule à un disque équivalent et sa taille « bidimensionnelle » au diamètre équivalent de ce disque. Plus précisément, les tailles bidimensionnelles sont calculées par un programme faisant pour chaque particule de composé calco-magnésien vif dispersé dans la matrice continue de ferrite de calcium la somme de la plus petite et de la plus grande dimension divisée par deux de sa surface de coupe. Cette somme divisée par deux représente le diamètre du disque équivalent.

Dans cette acception, on considère que les particules de composé calco-magnésien vif se fondent ou se confondent dans ladite matrice (phase continue) de ferrite de calcium lorsque lesdites particules de composé calco-magnésien vif ont une taille bidimensionnelle inférieure à 63 µm, observables par microscopie électronique à balayage couplées à l'analyse dispersive en énergie, dans une coupe de la briquette.

On considère par ailleurs que des inclusions de composé calco-magnésien vif sont présentes dans la matrice à base de ferrite de calcium, lorsque des particules de composé calco-magnésien vif ayant une taille bidimensionnelle supérieure à 63 µm, mais inférieure à 5 mm, observables par microscopie électronique à balayage couplées à l'analyse dispersive en énergie, dans une coupe de la briquette couvrent au moins 20% de la surface de ladite coupe.

On considère aussi que si des particules de composé calco-magnésien vif ayant une taille bidimensionnelle supérieure à 63 µm mais inférieure à 5 mm, observables par microscopie électronique à balayage couplées à l'analyse dispersive en énergie, dans une coupe de la briquette sont présentes mais couvrent moins de 20%, en particulier moins de 10% de la surface de ladite coupe, il n'y a pas présence de véritables inclusions de composés calco-magnésien vif mais plutôt présence fortuite de quelques particules de composés calco-magnésien vif, résultat notamment de la non-idéalité du processus de fabrication, en particulier de la cuisson, de la briquette.

Des briquettes de ferrites de calcium sans présence significative d'inclusion de composés calco-magnésien vif sont donc utilisables en sidérurgie, notamment en convertisseur pour le raffinage de métal fondu afin de faciliter la formation de laitier. De telles briquettes offrent donc clairement un avantage d'accélération de la formation de scorie et d'augmentation de sa fluidité.

Cependant, les ferrites de calcium ne permettent pas elles-mêmes de raffiner le métal fondu, à savoir d'en capter les impuretés. C'est uniquement le composé calco-magnésien, en particulier la chaux vive qui peut assurer cette fonction. Il est donc possible d'ajouter par exemple de la chaux vive en roche ou des briquettes de chaux vive simultanément aux briquettes à base de ferrites de calcium selon l'invention.

Une alternative avantageuse selon l'invention est de prévoir des inclusions de composés calco-magnésiens vifs, en particulier de chaux vive dispersées dans la phase continue (matrice) de ferrite de calcium, comme décrit ci-dessus. En effet, le composé calco-magnésien vif est alors disponible in situ à l'endroit où les ferrites de calcium ont favorisé la formation du laitier, agissant comme fondant pour permettre au composé calco-magnésien vif d'agir immédiatement.

Dans une forme de réalisation, ladite composition est donc caractérisée en ce que lesdites particules de composé calco-magnésien vif ont une taille bidimensionnelle inférieure à 63 µm, observables par microscopie électronique à balayage couplées à l'analyse dispersive en énergie, dans une coupe de ladite briquette.

Dans une forme de réalisation préférentielle, ladite composition est caractérisée en ce qu'elle comprend en outre des particules de composé calco-magnésien vif de taille bidimensionnelle supérieure à 63 µm et inférieure à 5 mm, observables par microscopie électronique à balayage couplées à l'analyse dispersive en énergie, dans une coupe de ladite briquette.

Avantageusement, ladite composition est caractérisée en ce qu'elle comprend desdites particules de composé calco-magnésien vif de taille bidimensionnelle supérieure à 63 µm et inférieure à 5 mm, observables par microscopie électronique à balayage couplées à l'analyse dispersive en énergie, dans une coupe de ladite briquette et couvrant au moins 20% de la surface de ladite coupe.

Préférentiellement, ladite composition est caractérisée en ce qu'elle comprend desdites particules de composé calco-magnésien vif de taille bidimensionnelle supérieure à 63 µm et inférieure à 5 mm, observables par microscopie électronique à balayage couplées à l'analyse dispersive en énergie, dans une coupe de ladite briquette et couvrant au plus 60% de la surface de ladite coupe de la briquette.

Dans un autre mode de réalisation, ladite composition est caractérisée en ce qu'elle comprend desdites particules de composé calco-magnésien vif de taille bidimensionnelle supérieure à 63 µm et inférieure à 5 mm, observables par microscopie électronique à balayage couplées à l'analyse dispersive en énergie, dans une coupe de ladite briquette et couvrant moins de 20%, préférentiellement moins de 10% de la surface de ladite coupe.

Avantageusement, ladite composition est caractérisée en ce que au moins 70% en poids, préférentiellement 80% en poids, plus préférentiellement 90% en poids dudit composé à base de fer est sous forme de ferrite de calcium.

En fait, il y a substantiellement deux phases possibles de ferrites de calcium. Les ferrites mono-calciques de formule CaFe₃O₄ et les ferrites di-calciques Ca₂Fe₂O₅. Les premières présentent l'avantage de fondre à plus basse température, ce qui accentue potentiellement le rôle de fondant lors de leur utilisation. Les secondes ont un point de fusion plus élevé, qui en permet une fabrication potentiellement plus aisée mais avec un traitement thermique qui peut être plus onéreux en énergie.

Préférentiellement, ladite composition est donc caractérisée en ce que au moins 40% en poids, préférentiellement 50% en poids dudit ferrite de calcium est sous forme de ferrite mono-calcique CaFe₂O₄.

Dans un mode de réalisation alternatif, ladite composition est caractérisée en ce que au moins 40% en poids, préférentiellement 50% en poids dudit ferrite de calcium est sous forme de ferrite di-calcique Ca₂Fe₂O₅.

Préférentiellement, ladite composition est caractérisée en ce qu'elle présente une surface spécifique BET supérieure ou égale à 0,4 m²/g, de préférence supérieure ou égale à 0,6 m²/g, plus préférentiellement supérieure ou égale à 0,8 m²/g. Avantageusement, ladite composition est caractérisée en ce qu'elle présente une porosité supérieure ou égale à 20%, préférentiellement supérieure ou égale à 22%, plus préférentiellement supérieure ou égale à 24%.

Par les termes « porosité de la composition sous forme de briquettes », on entend au sens de la présente invention, le volume poreux total de mercure déterminé par porosimétrie par intrusion de mercure suivant la partie 1 de la norme ISO 15901-1 :2005E qui consiste à diviser la différence entre la densité squelettique, mesurée à 30000 psia, et la densité apparente, mesurée à 0.51 psia, par la densité squelettique.

Alternativement, la mesure de la porosité peut également être mesurée par porosimétrie par intrusion de pétrole. La densité et la porosité des briquettes sont déterminées par intrusion de pétrole lampant, selon un protocole de mesure issu de la norme EN ISO 5017. Les mesures sont réalisées sur 5 briquettes.

La densité des briquettes est calculée selon la formule m1 / (m3 - m2) x Dp et la porosité en pourcent selon la formule (m3 - m1) / (m3 - m2) x 100.

m1 est la masse de ces 5 briquettes, m2 est la masse de ces 5 briquettes immergées dans le pétrole et m3 est la masse de ces 5 briquettes « humides », c'est-à-dire imprégnées par le pétrole. Dp est la densité du pétrole.

Préférentiellement, lesdites briquettes sont caractérisées en ce qu'elles présentent un indice de Shatter test inférieur à 10%, préférentiellement inférieure à 8%, avantageusement inférieure à 6%.

Par les termes « indice de Shatter test », on entend au sens de la présente invention, le pourcentage massique des fines inférieures à 10 mm générées à l'issue de 4 chutes de 2 m au départ de 10kg de produit. Ces fines sont quantifiées au moyen d'un tamisage au travers un crible à mailles carrées de 10 mm à l'issue des 4 chutes de 2 m.

La détermination des % en poids d'équivalent CaO + MgO, mais aussi Fe₂O₃ est réalisée par spectrométrie de fluorescence des rayons X (XRF) comme décrit dans la norme EN 15309. L'analyse chimique, semi-quantitative, par XRF pour déterminer la concentration massique relative des éléments dont la masse atomique est comprise entre 16 (oxygène) et 228 (uranium) est réalisée au départ des échantillons broyés à 80µm et mis en forme sous forme de pastille. Les échantillons sont introduits dans un appareillage PANalytical/MagiX PRO PW2540, fonctionnant en dispersion de longueur d'ondes. La mesure est réalisée avec une puissance de 50kV et 80 mA, avec un détecteur Duplex.

Les résultats de l'analyse donnent la teneur en calcium, en magnésium et en fer et ces mesures sont rapportées en poids d'équivalent CaO et MgO, et en poids d'équivalent Fe₂O₃.

La présente invention se rapporte aussi à un procédé de fabrication de briquettes cuites qui comprend les étapes suivantes :
- mélange de particules de composé calco-magnésien, préférentiellement sous forme de particules de chaux vive avec des particules d'un composé à base de fer, préférentiellement sous forme d'oxyde de fer de sorte à obtenir un mélange homogène pulvérulent;
- alimentation d'une presse à rouleaux avec ledit mélange homogène pulvérulent,
- compression dans ladite presse à rouleaux dudit mélange homogène pulvérulent, avec obtention d'une composition calco-magnésienne sous forme de briquettes crues,
caractérisé en ce que lesdits rouleaux de la presse à rouleaux développent des vitesses linéaires en périphérie des rouleaux comprises entre 10 et 100 cm/s, préférentiellement comprises entre 20 et 80 cm/s, et des pressions linéraires comprises entre 60 et 160 kN/cm, préférentiellement comprises entre 80 et 140 kN/cm, et de manière encore plus préférentielle comprises entre 80 et 120 kN/cm, en ce que lesdites briquettes sont des briquettes cuites, le procédé comprenant en outre un traitement thermique desdites briquettes crues à une température comprise entre 1050°C et 1200°C pendant une durée comprise entre 5 et 25 minutes, préférentiellement comprise entre 10 et 20 minutes , ladite étape de mélange étant réalisée avec une fraction de particules de composé calco-magnésien présentant au moins 30% en poids des particules ≤ 90 µm (donc présentant un d₃₀ ≤ 90 µm), laquelle comprend au moins 20 % en poids d'équivalent CaO par rapport au poids total dudit mélange homogène pulvérulent, et avec au moins 20% en poids de particules de fer ayant un d₉₀ inférieur à 200µm, préférentiellement inférieur à 150 µm, plus préférentiellement inférieur à 130 µm et de la manière la plus préférentielle, inférieur à 100 µm.

Selon la présente invention, il a en effet été constaté que contrairement aux compositions connues, dans les briquettes selon la présente invention, d'une part grâce au fait que le mélange formé est homogène, mais d'autre part, également par la grande quantité du composé à base de fer présente sous la forme d'oxyde de fer, une grande quantité d'oxyde de fer était convertie en ferrite de calcium, après traitement thermique, formant ainsi une phase continue appelée matrice dans les conditions spécifiques identifiées comment avantageuse dans le procédé selon la présente invention.

Pourtant, bien que dans les compositions connues, il était identifié que la granulométrie de l'oxyde de fer n'était pas adaptée, souvent trop grosse, l'homme de métier sait aussi que l'utilisation de poudres fines dans des procédés de mise en forme par briquetage va à l'encontre des bonnes pratiques pour l'homme de métier puisqu'elles dégradent les propriétés d'écoulement du mélange et donc l'alimentation des presses.

La distribution granulométrique du composé à base de fer qui est mis en oeuvre dans le procédé est déterminée par granulométrie laser. La mesure est donc basée sur la diffraction de la lumière et suit les théories de Fraunhofer et de Mie.

Notamment, on considère que les particules sont sphériques non poreuses et opaques. La mesure est réalisée selon la norme ISO 13320 dans du méthanol, sans sonication.

De plus, il a été mis en évidence selon la présente invention que ce n'est pas uniquement la granulométrie qui permet d'atteindre un taux de conversion suffisant après traitement thermique ou dans les convertisseurs, mais plutôt qu'il faut pouvoir disposer d'un oxyde de fer sensiblement actif lorsqu'il est mis en oeuvre avec les composés calco-magnésiens vifs sous forme de briquette.

Par les termes un composé à base de fer, un composé de fer de distribution granulométrique très fine, on entend par exemple un composé à base de fer, de préférence à base d'oxyde de fer, caractérisé par une taille médiane d₅₀ inférieure à 100 µm, préférentiellement 50 µm ainsi qu'une taille d₉₀ inférieure à 200 µm, de préférence inférieure à 150 µm, préférentiellement inférieure à 130 µm, plus préférentiellement inférieure à 100 µm.

Le procédé selon la présente invention permet donc l'obtention de briquettes de composé calco-magnésiens cuites dont la résistance mécanique n'est pas pénalisée par l'ajout de fondants, dont l'oxyde de fer présente une distribution granulométrique très fine caractérisée par une taille médiane d₅₀ inférieure à 100 µm), préférentiellement 50 µm ainsi qu'une taille dso inférieure à 200 µm, de préférence inférieure à 150 µm, préférentiellement inférieure à 130 µm, plus préférentiellement inférieure à 100 µm, et qui en outre est très flexible et performant, sans apporter les contraintes susdites.

Au sens de la présente invention, ledit un composé à base de fer peut-être formé d'un ou plusieurs composés à base de fer, totalisant ensemble dans la composition une teneur d'au moins 20%, préférentiellement au moins 25%, plus préférentiellement au moins 30%, de manière préférée au moins 35% en poids.

Au sens de la présente invention, sauf s'il en est précisé autrement, la notation dₓ représente un diamètre exprimée en µm, mesuré par granulométrie laser dans le méthanol sans sonication, par rapport auquel x% en volume des particules mesurées sont inférieures ou égales. Dans le cas du composé calco-magnésien vif, en particulier de la chaux vive, la méthode de mesure de la granulométrie est par tamisage et non par diffraction laser. Les pourcentages sont alors naturellement exprimés en poids.

Dans une forme de réalisation particulière, le procédé selon la présente invention comprend en outre un traitement thermique desdites briquettes crues collectées à une température comprise entre 900°C et 1200°C, de préférence comprise entre 1050 °C et 1200°C inclus, plus préférentiellement entre 1100°C et 1200°C inclus. Le temps de traitement thermique est réalisé de préférence pendant une durée prédéterminée comprise entre 3 et 20 minutes, de préférence supérieure ou égale à 5 minutes et inférieure ou égale à 15 minutes, avec formation et obtention de briquettes cuites, dans lesquelles ledit oxyde de fer est converti en ferrite de calcium, c'est-à-dire de briquettes cuites comprenant un composé calco-magnésien vif et un composé à base de fer comprenant au moins du ferrite de calcium.

Lorsque le traitement thermique est réalisé en condition « multicouche », c'est-à-dire que les briquettes sont sous la forme d'un lit statique de briquettes d'une certaine épaisseur, on comprend que le temps de traitement thermique peut être augmenté pour laisser le temps à la chaleur de pénétrer au coeur du lit de briquettes. Dans des conditions de températures inférieures ou égales à 1200°C, le traitement thermique permet d'obtenir des briquettes cuites comprenant un composé calco-magnésien et un composé à base de fer contenant du ferrite de calcium, dont la porosité et la surface spécifique n'est pas ou peu altérée et dont la résistance mécanique s'en trouve améliorée. En autres mots, on évite à ces températures le phénomène de frittage des briquettes. Ces caractéristiques de porosité relativement élevées permettent une dissolution rapide des briquettes cuites dans le laitier dans un procédé de raffinage métallurgique.

De cette manière, il a été observé que des briquettes obtenues par le procédé selon la présente invention présentent non seulement une teneur en ferrite de calcium suffisamment élevée, mais que les briquettes présentent une résistance mécanique représentée par l'indice de Shatter test particulièrement intéressante.

En effet, dans le procédé selon la présente invention, les briquettes cuites présentent un indice de Shatter test inférieur à 8%, plus particulièrement inférieur à 6%, de préférence inférieur à 4%, plus particulièrement inférieur à 3%, voire même autour de 2%.

Ceci signifie que selon la présente invention, on parvient à produire des briquettes très résistantes, dont la perte due aux briquettes brisées ou à la formation de fines durant leur transport est réduit de manière significative et qu'il est possible de contrecarrer les inconvénients des briquettes connues, lesquelles génèrent bien souvent une perte allant jusqu'à plus de 20 % de chaux vive en raison de la génération de fines durant le transport vers l'atelier de préparation d'acier et en raison de la manipulation et du transport à l'intérieur de l'atelier de préparation d'acier.

Avantageusement, le procédé selon la présente invention comprend une étape de recyclage de fines de ladite étape de briquetage et/ou de ladite étape de traitement thermique et d'une étape d'introduction de ces fines dans ladite étape de mélange.

Dans encore une autre variante selon la présente invention, le procédé selon la présente invention comprend un prétraitement des briquettes sous atmosphère modifiée contenant au moins 2% en volume de CO₂ et au plus 30%, en particulier au plus 20%, avantageusement au plus 15%, de préférence au plus 10 % en volume de CO₂ par rapport à ladite atmosphère modifiée.

Dans encore une forme de réalisation particulièrement avantageuse, ledit composé calco-magnésien vif est un composé calco-magnésien à cuisson douce ou moyenne, de préférence à cuisson douce.

En effet, dans le procédé selon la présente invention, il est avantageux que le composé calco-magnésien amené sous forme de mélange homogène, soit lui aussi suffisamment réactif, de manière à former avec le composé à base de fer des briquettes cohésives après traitement thermique. De plus, à l'utilisation dans les convertisseurs pour former du laitier, il est avantageux que le composé calco-magnésien vif soit suffisamment réactif.

Les composés calco-magnésiens vifs, tels que la chaux vive sont industriellement produits par cuisson de calcaires naturels dans différents types de fours tels que des fours droits (fours régénératifs à double flux, fours annulaires, fours droits standard...) ou bien encore des fours rotatifs. La qualité du composé calco-magnésien, tel que par exemple de la chaux vive, notamment sa réactivité à l'eau, et la consistance de cette qualité, sont en partie liées au type de four utilisé, aux conditions d'utilisation du four, à la nature du calcaire dont est issu le composé calco-magnésien vif en lui-même, ou bien encore à la nature et à la quantité du combustible utilisé. Ainsi, il est théoriquement possible de produire toute une gamme de composés calco-magnésiens vifs, comme par exemple de chaux vive avec des réactivités à l'eau allant des plus explosives aux plus lentes.

Avantageusement, ledit composé calco-magnésien vif est de la chaux vive.

En général, l'obtention d'une chaux vive par une cuisson douce (900-1000°C) permet d'obtenir une chaux plutôt réactive alors que l'obtention d'une chaux peu réactive passe par une sur-cuisson à plus haute température (1200-1400°C). La sur-cuisson conduit bien souvent à produire une chaux vive de qualité moins stable en termes de réactivité à l'eau car l'opération de calcination est réalisée dans une zone thermique où l'évolution texturale de la chaux vive est assez sensible. Cette chaux vive sur-cuite est par ailleurs plus chère à produire qu'une chaux vive plus douce car elle nécessite d'utiliser des températures plus élevées mais aussi parce que, sauf à utiliser des fours dédiés, la production de cette chaux vive sur-cuite conduit à des inter-campagnes de production pour alterner avec la production des chaux vives douces qui sont plus couramment utilisées, ce qui n'est pas sans poser des problèmes de stabilisation des conditions de calcination et donc des problèmes de stabilisation de la qualité.

Les chaux vives obtenues par cuisson douce présentent en général des surfaces spécifiques mesurées par manométrie d'adsorption d'azote après dégazage sous vide à 190°C pendant au moins 2 heures et calculée selon la méthode BET multi-points telle que décrite dans la norme ISO 9277:2010E supérieures à 1 m²/g alors que les chaux vives sur-cuites présentent en général des surfaces bien inférieures à 1 m²/g.

Dans le cadre de cette invention, la réactivité de la chaux vive est mesurée en utilisant le test de réactivité à l'eau de la norme européenne EN 459-2 :2010 E. Ainsi, 150g de chaux vive sont ajoutés sous agitation dans un Dewar cylindrique de 1.7dm³ de capacité contenant 600cm³ d'eau permutée à 20°C. La chaux vive est amenée sous la forme de fines de taille comprise entre 0 et 1 mm. L'agitation à 250 tours par minute est réalisée au moyen d'une pâle spécifique. L'évolution de la température est mesurée en fonction du temps, ce qui permet de tracer une courbe de réactivité. On peut déduire de cette courbe la valeur t₆₀ qui est le temps nécessaire pour atteindre 60°C.

La réactivité de la dolomie cuite est mesurée en utilisant ce même test de réactivité. Dans ce cas, 120g de dolomie cuite (dolomie vive - dolime en anglais) sont ajoutés sous agitation dans un Dewar cylindrique de 1.7dm³ de capacité contenant 400cm³ d'eau permutée à 40°C. La dolomie cuite est amenée sous la forme de fines de taille comprise entre 0 et 1 mm. L'agitation à 250 tours par minute est réalisée au moyen d'une pâle spécifique. L'évolution de la température est mesurée en fonction du temps, ce qui permet de tracer une courbe de réactivité. On peut déduire de cette courbe la valeur t₇₀ qui est le temps nécessaire pour atteindre 70°C.

La composition selon la présente invention comprend préférentiellement un composé calco-magnésien à cuisson douce ou moyenne, de préférence douce qui est donc forcément relativement réactif fournissant ainsi des briquettes réactives.

Selon la présente invention, un composé calco-magnésien à cuisson douce ou moyenne, de préférence douce, est caractérisé par une valeur t₆₀ inférieur à 10 min, préférentiellement 8 min, préférentiellement 6 min, et encore préférentiellement 4 min lorsque le composé calco-magnésien est une chaux vive et par une valeur de t₇₀ inférieur à 10 min, préférentiellement 8 min, préférentiellement 6 min, et encore préférentiellement 4 min lorsque le composé calco-magnésien est une dolomie cuite.

Dans une forme de réalisation particulière du procédé selon la présente invention, le procédé comprend, avant ladite amenée d'un mélange pulvérulent homogène :
i. une alimentation d'un mélangeur avec au moins 40% en poids d'un composé calco-magnésien vif exprimé en équivalent CaO+MgO par rapport au poids de ladite composition et avec au moins 20%, préférentiellement au moins 25%, plus préférentiellement au moins 30%, de manière préférée au moins 35% en poids d'un composé à base de fer exprimé en équivalent Fe₂O₃ par rapport au poids de ladite composition, ledit composé à base de fer présentant une distribution granulométrique très fine caractérisée par une taille médiane d₅₀ inférieure à 100µm, préférentiellement 50 µm ainsi qu'une taille d₉₀ inférieure à 200 µm, de préférence inférieure à 150 µm, préférentiellement inférieure à 130 µm, plus préférentiellement inférieure à 100 µm ; et
ii. un mélange dudit composé calco-magnésien vif avec ledit composé à base de fer pendant une période prédéterminée, suffisante pour obtenir un mélange pulvérulent homogène dudit composé calco-magnésien vif et dudit composé à base de fer.

Plus particulièrement, dans le procédé selon la présente invention, bien qu'un liant ou lubrifiant puisse être ajouté directement au niveau de l'alimentation de la presse à rouleaux, ledit liant ou lubrifiant est ajouté au mélangeur, dans lequel ledit liant ou lubrifiant est inclus dans ledit mélange pulvérulent homogène.

Dans une autre forme de réalisation particulière du procédé selon la présente invention, ledit composé calco-magnésien contient au moins 10% en poids de chaux vive sous forme de particules broyées par rapport au poids de ladite composition.

Avantageusement, ledit composé calco-magnésien selon la présente invention contient au moins 40% en poids, de préférence au moins 50% poids, préférentiellement au moins 60 % en poids, particulièrement au moins 65% en poids, en particulier au moins 70% en poids, de préférence au moins 80% en poids, avantageusement au moins 90% en poids, voire même 100% en poids de chaux vive sous forme de particules broyées par rapport au poids de ladite composition.

On appelle chaux vive sous forme de particules broyées les fines de chaux provenant du broyage de la chaux vive et donc correspondant à une réduction dimensionnelle de la chaux en roche. Le broyage peut être indifféremment réalisé au départ du tout-venant sorti four et/ou sorti silo ou bien au départ du tout-venant sorti four et/ou sorti silo préalablement criblé. Le broyage peut être réalisé à l'aide de différents types de broyeurs (broyeur à impact, broyeur à marteau, broyeur à double rotor, broyeur conique ...), soit en circuit ouvert (pas de boucle de recirculation), soit en circuit fermé (boucle de recirculation).

La chaux vive sous forme de particules broyées (également appelées chaux de broyage) se distingue de la chaux de criblage. On appelle chaux de criblage les fines de chaux provenant du criblage de la chaux. On définit la granulométrie par la taille du crible. Par exemple, une chaux criblée à 3 mm conduit à l'obtention d'une chaux de criblage 0-3 mm. Ainsi le criblage sur le tout-venant sorti four conduit à une chaux de criblage « primaire ». Le criblage sur le tout-venant sorti silo de stockage conduit à une chaux de criblage « secondaire ».

Au sens de la présente invention, on entend par chaux vive sous forme de particules broyées, des fines de chaux contenant en général plus de très fines que les fines de chaux de criblage. Ainsi, si l'on considère par exemple des fines 0-3mm, les fines de chaux vive sous forme de particules broyées contiendront typiquement au moins 30% en poids, le plus souvent au moins 40% en poids, voir même au moins 50% en poids de très fines inférieures à 100 µm, alors que les fines de chaux de criblage contiendront souvent au plus 25% en poids, voir même au plus 15% en poids de très fines inférieures à 100 µm.

La composition chimique des fines de chaux de broyage est en générale plus homogène que celle des fines de chaux de criblage. Ainsi, si l'on considère par exemple une chaux en roche 10-50 mm cuite avec un combustible qui génère des cendres tel que le charbon (lignite, houille, anthracite...) ou encore le coke de pétrole, et que l'on caractérise les fines 0-3mm issues du broyage ou du criblage de cette chaux en roche, on constatera que la fraction 0-200 µm des fines 0-3 mm issues du broyage a une chimie similaire à celle de la fraction 200 µm-3 mm, alors que la fraction 0-200 µm des fines 0-3 mm issues du criblage contient plus d'impuretés que celle de la fraction 200 µm-3 mm.

Les fines de chaux de broyage sont en général plus réactives que les fines de chaux de criblage. Ainsi, pour la chaux vive à cuisson douce, si l'on mesure la réactivité à l'eau (norme EN459) des fines 0-3 mm, les fines de broyage présentent typiquement des valeurs de t₆₀ inférieures à 5 min là où les fines de criblage primaire présentent souvent des valeurs de t₆₀ supérieures à 5 min.

Il est en effet apparu de manière surprenante, sans qu'il soit actuellement possible d'en expliquer les raisons, que l'addition de chaux vive sous forme de particules broyées à une concentration d'au moins 10% en poids par rapport au poids des briquettes permettait d'obtenir une résistance mécanique à la chute fortement améliorée. Une teneur aussi restreinte que 10% en poids permet d'obtenir une amélioration significative de la résistance mécanique, bien que la teneur en particules broyées puisse aller jusqu'à 100% en poids.

Plus particulièrement, ladite chaux vive sous forme de particules broyées est une chaux vive à cuisson douce ou à cuisson moyenne, de préférence à cuisson douce, ladite chaux vive sous forme de particules broyées étant caractérisée par une valeur t₆₀ inférieure à 10 min, préférentiellement inférieure à 8 min, préférentiellement inférieure à 6 min, et encore préférentiellement inférieure à 4 min.

D'autres formes de réalisation du procédé suivant l'invention sont indiquées dans les revendications annexées.

Cette résistance mécanique, évaluée par le Shatter test, pour des briquettes crues ayant des teneurs en composé à base de fer inférieures à 40% est particulièrement intéressante du fait que ces briquettes crues peuvent être par la suite traitées thermiquement, selon un mode de réalisation de l'invention, dans un four rotatif dans lequel ces briquettes sont donc soumises à des chutes à répétition.

Au sens de la présente invention, ledit composé calco-magnésien vif comprend un ou plusieurs composés calco-magnésien vif. Le composé calco-magnésien vif est choisi dans le groupe constitué de la chaux vive (calcique), de la chaux magnésienne, de la chaux dolomitique vive, de la dolomie calcinée et leurs mélanges, de préférence sous forme de particules, telles que des particules issues d'un criblage, d'un broyage, de poussières de filtres et leur mélange. Ledit composé calco-magnésien vif peut donc être considéré comme une composante calco-magnésienne de la composition sous forme de briquettes, laquelle peut contenir d'autres composés.

Dans une forme particulière de l'invention, ledit mélange pulvérulent comprend au plus 97 % en poids, de préférence au plus 90 % en poids, de manière préférée, au plus 88%, dans certaines forme de réalisation, au plus 60% en poids d'équivalent CaO+MgO par rapport au poids de ladite composition.

Dans un mode de réalisation de l'invention, un liant ou un lubrifiant, plus particulièrement choisi dans le groupe constitué des liants d'origine minérale tels que les ciments, les argiles, les silicates, des liants d'origine végétale ou animale, tels que les celluloses, les amidons, les gommes, les alginates, la pectine, les colles, des liants d'origine synthétique, tels que les polymères, les cires, des lubrifiants liquides tels que des huiles minérales ou des silicones, des lubrifiants solides tels que le talc, le graphite, les paraffines, les stéarates, en particulier le stéarate de calcium, le stéarate de magnésium et de leurs mélanges, de préférence du stéarate de calcium et/ou du stéarate de magnésium, à une teneur comprise entre 0,1 et 1 % en poids, de préférence entre 0,15 et 0,6 % en poids, de manière plus préférentielle entre 0,2 et 0,5 % en poids par rapport au poids total de la composition peut-être ajouté durant le mélange dans le procédé selon la présente invention.

L'invention a aussi pour objet une utilisation d'une composition sous forme de briquettes cuites selon la présente invention dans la sidérurgie, en particulier dans les convertisseurs à oxygène ou bien dans les fours à arcs électriques.

Plus particulièrement, les briquettes cuites selon la présente invention sont utilisées dans des convertisseurs à oxygène ou dans des fours à arcs électriques, en mélange avec des briquettes de composés calco-magnésiens vifs ou avec des galets de composés calco-magnésiens vifs.

En effet, durant les premières minutes du procédé de raffinage, il n'y a pas suffisamment de laitier disponible dans la cuve réactionnelle pour que commence efficacement la réaction de déphosphoration dans les procédés de l'état de la technique. L'utilisation de la composition selon la présente invention, donc dopée avec des fondants, s'avère fondre plus rapidement que la chaux en roches, et aide à former un laitier liquide plus tôt au début du procédé, en comparaison avec les procédés conventionnels, du fait d'un mélange homogène et du façonnage de ce mélange homogénéisé qui permet d'accélérer encore le procédé de formation de laitier et de minimiser la formation de composants de laitier à point de fusion élevé tels que les silicates de calcium qui se forment habituellement durant le procédé susmentionné de l'état de la technique.

L'invention a également pour objet l'utilisation d'une composition sous forme de briquettes cuites dans un procédé de raffinage de métal fondu, en particulier de déphosphoration de métal fondu et/ou de désulfurisation de métal fondu et/ou de réduction de perte en métal raffiné dans le laitier.

L'utilisation d'une composition sous forme de briquettes cuites selon la présente invention dans un procédé de raffinage de métal fondu comprend
- au moins une étape d'introduction de métal chaud et éventuellement de déchets à base de fer dans une cuve,
- au moins une étape d'introduction d'une composition sous forme de briquettes cuites selon la présente invention,
- au moins une étape de soufflage d'oxygène dans ladite cuve,
- au moins une étape de formation d'un laitier avec ladite composition de briquettes dans ladite cuve,
- au moins une étape d'obtention de métal raffiné ayant une teneur réduite en composés phosphorés et/ou soufrés et/ou une teneur augmentée en métal raffiné à partir du métal chaud par déphosphoration et/ou désulfuration, et
- au moins une étape de déchargement dudit métal raffiné ayant une teneur réduite en composants phosphorés et/ou soufrés et/ou augmentée en métal raffiné.

L'utilisation suivant la présente invention comprend en outre potentiellement une étape d'ajout de chaux vive, de préférence de la chaux vive en roche ou des compacts de chaux vive, en particulier de tablettes ou de briquettes de chaux vive.

D'autres formes d'utilisation suivant l'invention sont indiquées dans les revendications annexées.

D'autres caractéristiques, détails et avantages de l'invention ressortiront de la description donnée ci-après, à titre non limitatif et en faisant référence aux exemples et aux figures.
La figure 1 est un graphique de la surface spécifique BET et du volume poreux BJH en fonction de la teneur en équivalent Fe₂O₃ dans les briquettes selon la présente invention.
La figure 2 est un graphique de l'indice de Shatter test (Shatter Test Index - STI) en fonction de la teneur en équivalent Fe₂O₃ dans les briquettes cuites et crues selon la présente invention.
La figure 3 est un graphique du % en Fe₂O₃ converti en ferrites de calcium en fonction de la teneur en équivalent Fe₂O₃ dans les briquettes cuites selon la présente invention
La figure 4 est un graphique du % en Fe₂O₃ converti en ferrites de calcium en fonction de la teneur en équivalent Fe₂O₃ dans les briquettes cuites selon la présente invention.
La figure 5 montre des photographies des coupes de différentes briquettes de compositions selon la présente invention.

La présente invention concerne un procédé de briquetage de particules fines de composés calco-magnésiens et de composé à base de fer, ledit composé à base de fer présentant une distribution granulométrique très fine caractérisée par taille médiane d₅₀ inférieure à 100 µm, préférentiellement inférieure à 50 µm ainsi qu'une taille d90 inférieure à 200 µm, de préférence inférieure à 150 µm, préférentiellement inférieure à 130 µm, plus préférentiellement inférieure à 100 µm.

Le procédé de briquetage selon l'invention comprend une amenée d'un mélange pulvérulent comprenant au moins un composé calco-magnésien vif, ledit mélange comprenant au moins 40 % en poids d'équivalent CaO+MgO par rapport au poids de ladite composition et présentant un ratio molaire Ca/Mg supérieur ou égal à 1, de préférence supérieur ou égal à 2, plus particulièrement supérieur ou égal à 3 et un composé à base de fer présentant une distribution granulométrique très fine caractérisée par une taille médiane dso inférieure à 100 µm, préférablement 50 µm ainsi qu'une taille d₉₀ inférieure à 200 µm, de préférence inférieure à 150 µm, préférablement inférieure à 130 µm, plus préférablement inférieure à 100 µm; dans lequel ledit composé calco-magnésien vif comprenant au moins 40 % en poids d'équivalent CaO+MgO comprend également au moins une fraction de particules de composé-calco-magnésien présentent une taille de particules ≤ 90 µm, laquelle comprend en outre au moins 20% en poids d'équivalent CaO par rapport au poids dudit mélange pulvérulent et dans lequel ledit composé à base de fer étant présent à une teneur d'au moins 20 % en poids, de préférence d'au moins 25% en poids, plus préférentiellement, d'au moins 30% en poids, en particulier d'au moins 35 % en poids par rapport au poids total dudit mélange pulvérulent.

Avantageusement, selon la présente invention, ladite fraction de particules de composé-calco-magnésien présentent une taille de particules ≤ 90 µm contient au plus 60 % en poids d'équivalent CaO par rapport au poids dudit mélange pulvérulent.

Selon la précédé de l'invention, non seulement la formation de ferrite de calcium est améliorée et présente un rendement de conversion de l'oxyde de fer en ferrite de calcium d'environ 90 %, mais aussi l'équilibre entre la formation de ferrites mono-calciques et de ferrites di-calcique peut-être contrôlé. Il s'est en effet avéré intéressant d'un point de vue industriel de pouvoir contrôler la proportion de ferrites di-calcique par rapport à la proportion de ferrites mono-calcique en fonction des besoins et vice versa.

Le mélange sensiblement homogène dans lequel le composé à base de fer est réparti de manière homogène est alimenté à une presse à rouleaux, aussi appelée parfois presse tangentielle, par exemple une presse Komarek, Sahut Konreur, Hosokawa Bepex, Köppern.

Dans la presse à rouleaux, le mélange pulvérulent homogène est comprimé, éventuellement en présence d'un liant ou d'un lubrifiant, plus particulièrement choisi dans le groupe constitué des liants d'origine minérale tels que les ciments, les argiles, les silicates, des liants d'origine végétale ou animale, tels que les celluloses, les amidons, les gommes, les alginates, la pectine, les colles, des liants d'origine synthétique, tels que les polymères, les cires, des lubrifiants liquides tels que des huiles minérales ou des silicones, des lubrifiants solides tels que le talc, le graphite, les paraffines, les stéarates, en particulier le stéarate de calcium, le stéarate de magnésium, et de leurs mélanges, de préférence du stéarate de calcium et/ou du stéarate de magnésium, à une teneur comprise entre 0,1 et 1 % en poids, de préférence entre 0,15 et 0,6 % en poids, de manière plus préférentielle entre 0,2 et 0,5 % en poids par rapport au poids total desdites briquettes.

En utilisation, les rouleaux de la presse à rouleaux développent des vitesses linéaires en périphérie des rouleaux comprises entre 10 et 100 cm/s, préférentiellement comprises entre 20 et 80 cm/s, et des pressions linéraires comprises entre 60 et 160 kN/cm, préférentiellement comprises entre 80 et 140 kN/cm, et de manière encore plus préférentielle comprises entre 80 et 120 kN/cm .

En considérant un angle de ½ degré sur laquelle la pression linéaire s'applique en surface des frettes, on peut calculer une pression surfacique qui est égale à la pression linéaire divisée par (½.π.D)/360 où D est le diamètre des frettes exprimé en cm. La pression surfacique est comprise entre 300 et 500 MPa, préférentiellement entre 300 et 450 MPa, et encore préférentiellement entre 350 et 450 MPa.

A l'issue de la compression, la composition calco-magnésienne sous forme de briquettes crues est obtenue et ces dernières sont collectées.

Dans le procédé selon la présente invention, les briquettes crues collectées sont traitées thermiquement à une température comprise entre 900°C et 1200°C, de préférence entre 1050°C et 1200°C, plus préférentiellement entre 1100°C et 1200°C inclus. Le temps de traitement thermique est réalisé de préférence pendant une durée prédéterminée comprise entre 3 et 20 minutes, avec obtention de briquettes cuites dans lesquelles ledit oxyde de fer est converti en ferrite de calcium et forme une matrice de ferrite de calcium dans lequel des particules de composé calco-magnésien sont dispersées.

Ladite matrice doit être comprise comme étant une phase continue à base de ferrite de calcium dans laquelle sont dispersées des particules de composé calco-magnésien vif, en particulier de chaux vive. On distingue le cas où lesdites particules de composé calco-magnésien vif sont de petite taille de sorte qu'elles se fondent visuellement dans la matrice à base de ferrite de calcium du cas où des particules de composé calco-magnésien vif sont de plus grande taille apparaissant comme des inclusions de composé calco-magnésien vif dans ladite matrice.

Concrètement, on matérialise la distinction précitée en ayant recours à une coupe d'une briquette selon l'invention, sur laquelle on pratique une microscopie électronique à balayage couplées à une analyse dispersive en énergie. Ce faisant, on visualise en deux dimensions (la surface de la coupe) un objet initialement en trois dimensions (la briquette) mais aussi les particules qui composent la briquette. Ainsi, les particules de composé calco-magnésien apparaissent-elles également en deux dimensions sur le plan de coupe. Comme il est d'usage d'assimiler des particules en trois dimensions à des sphères et de déterminer leur taille par le diamètre de la sphère équivalente (taille « tridimensionnelle »), on assimile dans la présente invention la surface de coupe de la particule à un disque équivalent et sa taille « bidimensionnelle » au diamètre équivalent de ce disque. Plus précisément, les tailles bidimensionnelles sont calculées par un programme faisant pour chaque particule de composé calco-magnésien vif dispersé dans la matrice continue de ferrite de calcium la somme de la plus petite et de la plus grande dimension divisée par deux de sa surface de coupe. Cette somme divisée par deux représente le diamètre du disque équivalent.

Dans cette acception, on considère que les particules de composé calco-magnésien vif se fondent ou se confondent dans ladite matrice (phase continue) de ferrite de calcium lorsque lesdites particules de composé calco-magnésien vif ont une taille bidimensionnelle inférieure à 63 µm, observables par microscopie électronique à balayage couplées à l'analyse dispersive en énergie, dans une coupe de la briquette.

Dans un mode de réalisation de l'invention, le traitement thermique des briquettes crues est réalisé dans un four rotatif à haute température, éventuellement équipé d'un préchauffeur

Alternativement, le traitement thermique est effectué dans un four horizontal comme par exemple un four tunnel, un four à passage, un four à charriots, un four à rouleaux ou encore un four à bande en maille. En variante, tout autre type de four conventionnel, mais ne conduisant pas à l'altération de l'intégrité des compacts, par exemple en raison d'une attrition trop importante, peut être utilisé.

Le refroidissement peut soit être effectué de manière conventionnel dans la partie aval du four, soit à l'extérieur du four, comme par exemple dans un refroidisseur vertical à contre-courant pour l'air de refroidissement ou encore dans un refroidisseur en lit fluidifié par l'air de refroidissement en cas de trempe.

Dans un mode particulier, le refroidissement à l'issue du traitement thermique est effectué de manière rapide en moins de 15 min, préférentiellement en moins de 10 min, en lit fluidifié par l'air de refroidissement.

L'analyse semi-quantitative des composés à base de fer (oxydes de fer Fe₂O₃, Fe₃O₄, ferrites de calcium CaFe₂O₄, Ca₂Fe₂O₅) est effectuée au départ d'un diffractogramme de rayons X par la méthode Rietveld.

Cette méthode consiste à simuler un diffractogramme à partir d'un modèle cristallographique de l'échantillon, puis d'ajuster les paramètres de ce modèle afin que le diffractogramme simulé soit le plus proche possible du diffractogramme expérimental. A l'issu de l'analyse semi-quantitative, on vérifie que la quantité total de fer exprimé en équivalent Fe₂O₃ ne diffère pas de plus de 10% par rapport aux valeurs obtenues par XRF. Le pourcentage du fer total sous forme de ferrites de calcium est obtenu par une simple division (Fe dans les ferrites divisé par Fe dans l'ensemble des composés à base de fer).

Dans une variante avantageuse du procédé selon la présente invention, ledit mélange pulvérulent comprend en outre moins de 10% de particules de composé calco-magnésien vif présentant une taille de particules ≥ à 90 µm et ≤ à 5 mm par rapport au poids total dudit mélange pulvérulent.

De cette manière, les briquettes obtenues par le procédé selon la présente invention présentent une relative homogénéité granulométrique, à savoir que la briquette, lorsqu'elle est coupée présente une composition granuleuse dans la majeure partie de son volume. On observe ainsi une phase continue, formée de ferrite de calcium, de composé calco-magnésien, comme par exemple de chaux vive et éventuellement de composé à base de fer, tel que d'oxyde de fer, en fonction de la teneur initiale dans la briquette crue de composé calco-magnésien, de composante calcique dans celui-ci, de composé à base de fer.

Dans une autre variante avantageuse du procédé selon la présente invention, ledit mélange pulvérulent comprend en outre entre 10% et 60% de particules de composé calco-magnésien vif présentant une taille de particules ≥ à 90 µm et ≤ à 5 mm par rapport au poids total dudit mélange pulvérulent.

Une alternative avantageuse selon l'invention est de prévoir des inclusions de composés calco-magnésiens vifs, en particulier de chaux vive dispersées dans la phase continue (matrice) de ferrite de calcium, comme décrit ci-dessus. En effet, le composé calco-magnésien vif est alors disponible in situ à l'endroit où les ferrites de calcium ont favorisé la formation du laitier, agissant comme fondant pour permettre au composé calco-magnésien vif d'agir immédiatement.

Dans cette variante avantageuse du procédé, il a été identifié que lors de la coupe d'une briquette cuite obtenue selon la présente invention, la surface de coupe était parsemée d'inclusion de composé calco-magnésien et/ou de chaux vive, ce qui permet de disposer de celle-ci sous forme de chaux vive n'ayant pas réagi pour former des ferrites de calcium et restant ainsi disponible pour une utilisation sous forme de chaux vive, comme par exemple dans la sidérurgie, pour la formation du laitier par exemple. La teneur en ces inclusions de composé calco-magnésien peut être plus ou moins importante comme indiqué ci-dessous dans la section se rapportant aux briquettes cuites selon la présente invention.

Plus particulièrement, dans le procédé selon la présente invention, ledit au moins un compose à base de fer est présent à une teneur supérieure ou égale à 20% en poids par rapport au poids total dudit mélange pulvérulent.

Lorsque la teneur en composé à base de fer, plus particulièrement en oxyde de fer de distribution granulométrique très fine est d'au moins 20% en poids par rapport au poids du mélange pulvérulent, mais aussi que la présence de CaO dans le composé calco-magnésien sous forme de particules très fine (d₃₀ < 90 µm) est d'au moins 20 % en poids, non seulement la formation de ferrite de calcium est améliorée et présente un rendement de conversion de l'oxyde de fer en ferrite de calcium d'environ 90 %, mais aussi l'équilibre entre la formation de ferrites mono-calciques et de ferrites di-calcique s'oriente vers la formation de ferrites di-calcique, particulièrement lorsque les teneurs en équivalent CaO et Fe₂O₃ très fins s'équilibre. Il s'est en effet avéré intéressant d'un point de vue industriel de pouvoir contrôler la proportion de ferrites di-calcique par rapport à la proportion de ferrites mono-calcique en fonction des besoins et vice versa.

Dans une forme de réalisation préférée du procédé selon la présente invention, le % en poids de chaux vive dans la fraction de composé calco-magnésien vif présentant une taille de particules < 90 µm par rapport au total du % en poids de chaux vive dans la fraction de composé calco-magnésien présentant une taille de particules < 90 µm et le % en équivalent Fe₂O₃ dudit composé à base de fer de distribution granulométrique très fine est ≥ à 30%, de préférence ≥ à 32%, plus préférentiellement ≥ 34%, de manière particulièrement préférée ≥ 36 %.

Il est en effet apparu de manière avantageuse qu'il était possible d'influencer et de contrôler la proportion de ferrite mono-calcique et de ferrite di-calcique lors de la cuisson des briquettes en adaptant le % en poids d'équivalent CaO présentant une taille de particules < 90 µm par rapport au total du % en poids desdites particules de chaux vive. Lorsque le % en poids de chaux vive dans la fraction de composé calco-magnésien vif présentant une taille de particules < 90 µm par rapport au total du % en poids de chaux vive dans la fraction de composé calco-magnésien présentant une taille de particules < 90 µm et le % en équivalent Fe₂O₃ dudit composé à base de fer de distribution granulométrique très fine est ≥ à 30%, de préférence ≥ à 32%, plus préférentiellement ≥ 34%, de manière particulièrement préférée ≥ 36 %. ; la cuisson des briquettes favorisera plutôt la formation de ferrite di-calcique (Ca₂Fe₂O₅).

Ceci signifie que si :
P1 représente le pourcentage dans le mélange pulvérulent destiné au briquetage des particules du composé calco-magnésien vif dont la taille est inférieure à 90 µm (fraction de composé calco-magnésien présentant une taille de particules < 90 µm),
P2 représente le pourcentage dans le mélange pulvérulent destiné au briquetage des particules du composé calco-magnésien vif dont la taille est supérieure à 90 µm,
P3: pourcentage du composé à base de fer (de distribution granulométrique très fine) dans le mélange pulvérulent destiné au briquetage,
C1 représente le pourcentage d'équivalent CaO dans les particules de composé calco-magnésien vif dont la taille est inférieure à 90µm
C2 représente le pourcentage d'équivalent CaO dans les particules de composé calco-magnésien vif dont la taille est supérieure à 90µm
C3 représente le pourcentage d'équivalent Fe₂O₃ dans le composé à base de fer (de distribution granulométrique très fine)

Alors, le ratio massique « P1/ (P1+P3) » est un paramètre clé qui doit être contrôlé pour former soit majoritairement des ferrites mono-calciques majoritaire ou soit majoritairement des ferrites di-calcique majoritaire, il vient de manière plus générale que le ratio massique « **P1.C1** / **(P1.C1+P3.C3)** » est l'une des possibilités de la formation de ferrite mono-calcique majoritaire ou bien ferrite di-calcique majoritaire,

Dans un tel cas de figure, ledit traitement thermique est de préférence un traitement thermique à une température inférieure ou égale à 1150°C, de préférence inférieure ou égale à 1100°C, plus particulièrement supérieure ou égale à 900°C, de préférence selon la relation (durée prédéterminée)/(température de traitement thermique - 1000°C) > 5.

Le pourcentage P2 est un paramètre clé qui doit être contrôlé pour former des briquettes avec ou sans inclusions de composé calco-magnésien vif ayant une taille bidimensionnelle supérieure à 63 µm.

Dans une autre forme de réalisation, ledit composé à base de fer comprend au moins 50% en poids, de préférence au moins 60% en poids, plus préférentiellement au moins 70% en poids, plus préférentiellement au moins 80% en poids et de manière particulière plus de 95% en poids d'oxyde de fer sous forme de magnétite Fe₃O₄ par rapport au poids total du composé à base de fer exprimé en équivalent Fe₂O₃.

Dans une autre variante préférée du procédé selon la présente invention, le % en poids d'équivalent CaO présentant une taille de particules < 90 µm par rapport au total du % en poids d'équivalent CaO présentant une taille de particules < 90 µm et dudit composé à base de fer est < à 40, de préférence < à 38, plus préférentiellement < 36% afin d'influencer la formation à la cuisson des briquettes, de ferrites mono-calciques.

Dans un tel cas de figure, ledit traitement thermique est un traitement thermique à une température inférieure ou égale à 1150°C, de préférence inférieure ou égale à 1100°C, plus particulièrement supérieure ou égale à 900°C, de préférence selon la relation (durée prédéterminée)/(température de traitement thermique - 1000°C) > 5, ce qui permet d'encore plus favoriser la formation de ferrites mono-calciques.

Plus particulièrement, dans cette variante du procédé selon la présente invention, ledit composé à base de fer comprend au moins 50% en poids, de préférence au moins 60% en poids, plus préférentiellement au moins 70% en poids, plus préférentiellement au moins 80% en poids et de manière particulière plus de 95% en poids d'oxyde de fer sous forme d'hématite Fe₂O₃ par rapport au poids total du composé à base de fer exprimé en équivalent Fe₂O₃.

Au moins 40%, préférentiellement au moins 50%, préférentiellement au moins 60% et encore préférentiellement au moins 70% du fer total est sous la forme de ferrites de calcium.

La quantification des ferrites de calcium est réalisée par analyse DRX/Rietveld après broyage des briquettes, comme pour les briquettes crues.

Les briquettes cuites de la présente invention présentent un Indice de Shatter Test (« STI », i.e. pourcentage massiques de fines inférieures à 10mm après 4 chutes de 2m) inférieur à 6%, quelle que soit la teneur en composés à base de fer.

Elles se caractérisent également par une surface spécifique supérieure ou égale à 0,4 m²/g, préférentiellement 0,5 m²/g, préférentiellement 0,6 m²/g.

La porosité est supérieure ou égale à 20% préférentiellement 22%, préférentiellement 24%.

Les briquettes cuites présentent une densité apparente comprise entre 2,0 et 3,0 et de préférence entre 2,2 et 2,8.

Les briquettes cuites présentent une bonne résistance au vieillissement. Ainsi, lorsqu'elles sont exposées à une atmosphère humide contenant par exemple 5 à 15 g/m³ d'humidité absolue, la dégradation de leurs propriétés mécaniques (STI) n'intervient qu'au-delà de 4 % de prise de masse, préférentiellement 4,5 % de prise de masse, et encore préférentiellement 5 % de prise de masse, consécutivement à la réaction d'hydratation de la chaux vive CaO en chaux éteinte Ca(OH)₂.

### Exemples.- (l'exemple 1 ne fait pas partie de l'invention)

### Exemple 1.- Préparation de fines de chaux vive de broyage et préparation pilote des briquettes

Les fines de chaux vive de broyage ont été préparées au départ d'une chaux en roche à cuisson douce produite dans un four régénératif à flux parallèle. Le broyage est réalisé dans un broyeur à marteaux équipé d'un crible à 2 mm et d'une boucle de recirculation pour les tailles supérieures à 2 mm. Ces fines de chaux vive de broyage contiennent 29% de particules de taille de particule inférieures à 90 µm (d₃₀ < 90 µm), 71% de particules supérieures à 90 µm, 37% de particules supérieures à 500 µm, 21% de particules supérieures à 1 mm et 1% de particules comprises entre 2 et 3 mm. La valeur t₆₀ du test de réactivité à l'eau est de 0,9 min. La surface spécifique BET (mesurée par manométrie d'adsorption d'azote après dégazage sous vide à 190°C pendant au moins deux heures et calculée selon la méthode BET multipoints telle que décrite dans la norme ISO 9277:2010E) est de 1,7 m2/g. Ces fines de chaux vive de broyage contiennent 95,7% de CaO et 0,8% de MgO en poids.

On utilise un mélangeur à poudre Gericke GCM450, d'une capacité de 10 dm³, équipé de pales standards de 7 cm de rayon utilisées en rotation à 350 tours par minute (i.e. 2,6 m/s). Ce mélangeur est utilisé en mode continu pour préparer un mélange constitué de :
- fines de chaux vive, éventuellement de fines de chaux de broyage,
- fines d'oxyde de fer,
- poudre de stéarate de calcium.

Le débit total de la poudre est de 300 kg/h et le temps de séjour est de 3,5 s.

Le mélange obtenu est très homogène. Cela signifie que la teneur en Fe pour différents échantillons de 10 g prélevés dans le mélange final est toujours située à plus ou moins 5% de la valeur moyenne.

On utilise une presse tangentielle équipée de frettes d'un diamètre de 604 mm et d'une largeur de 145 mm pour la production de briquettes d'un volume théorique de 7,2 cm³ avec une forme savonnette (4 rangées de 67 poches par frette, soit 268 poches par frette) et pouvant développée une pression linéaire allant jusqu'à 120 kN/cm.

Au départ de 10 tonnes du mélange, on alimente la presse tangentielle et on compacte à une vitesse de 12 tours par minute (soit une vitesse linéaire de 38 cm/s) à une pression linéaire de 120 kN/cm (soit une pression surfacique calculée de 455 MPa pour un angle de 0,5 degré).

On obtient près plusieurs tonnes de briquettes présentant un volume moyen de 8,4 cm³, un poids moyen de 21,4 g et une densité moyenne de 2,4. Ces briquettes ont une longueur d'environ 36 mm, une largeur d'environ 26 mm et une épaisseur d'environ 15,8 mm. Ces briquettes développent un volume poreux total de mercure (déterminé par porosimétrie par intrusion de mercure suivant la partie 1 de la norme ISO 15901-1 :2005E qui consiste à diviser la différence entre la densité squelettique, mesurée à 30000 psia, et la densité apparente, mesurée à 0.51 psia, par la densité squelettique).

La réactivité à l'eau des briquettes est déterminée en ajoutant une quantité prédéterminée de de ces briquettes, préalablement broyées sous la forme de fines de taille comprise entre 0 et 1 mm, à 600 ml d'eau à 20°C, de manière à correspondre à 150 g de chaux vive..

On fait un Shatter Test au départ de 10 kg de ces briquettes en réalisant successivement 4 chutes de 2 m. On pèse la quantité des fines inférieures à 10 mm générée à l'issue de ces 4 chutes.

La distribution granulométrique des particules à base de fer dans la composition sous forme de briquette est déterminée par microscopie électronique à balayage et cartographie X, couplée à de l'analyse d'image.

Les briquettes sont caractérisées également en réalisant un traitement thermique (enfournement / défournement à chaud) sur plusieurs de ces briquettes à l'issue duquel une poudre de granulométrie inférieure à 80 µm est préparée. Celle-ci est caractérisée en diffraction des rayons X et une quantification des phases est réalisée par analyse Rietveld..

### Exemples 2à 9.-

Des briquettes crues sont réalisées selon l'invention avec de la chaux vive de broyage contenant des particules de tailles comprises entre 0 et 2 mm, mais présentant différent profils granulométriques et des teneurs en oxyde de fer de type hématite, exprimées en équivalent Fe₂O₃ allant de 10% à 60%. L'oxyde de fer utilisé dans ces exemples est caractérisé par un d₁₀ de 0,5 µm, d₅₀ de 12,3 µm et d₉₀ de 35,7 µm. Dans chaque exemple, les particules de chaux vive de broyage de taille comprise entre 0 et 2 mm présentent au moins 30% de particules qui sont inférieures à 90 µm. Le protocole de préparation est décrit à l'exemple 1.

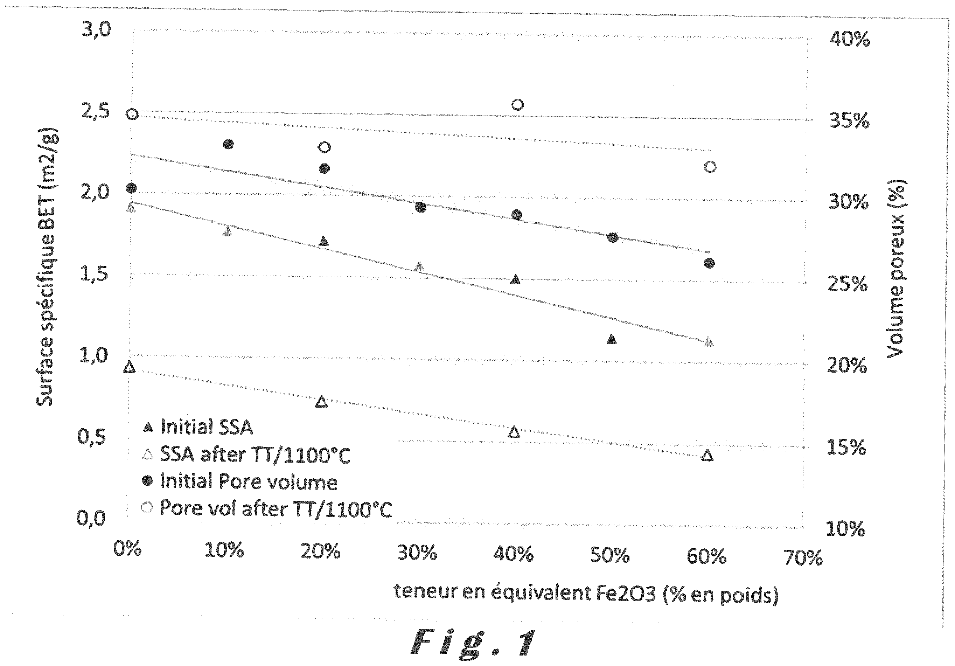

Des briquettes crues de même composition ont été traitées thermiquement à 1100°C ou à 1200°C pendant 20 minutes pour obtenir des briquettes cuites ayant différentes teneurs en chaux vive et en composés à base de fer. La composition des briquettes ainsi que les traitement thermiques réalisés sont présentés au tableau 1. Pour ces briquettes crues et cuites, plusieurs tests ont été réalisés et décrits ci-dessous à l'aide des figures 1 à 4.

La figure 1 présente un graphique montrant :
- l'évolution de la surface spécifique (SSA) BET en fonction de la teneur en composé à base de fer exprimée en équivalent Fe₂O₃, pour des briquettes crues ;
- l'évolution de la porosité en fonction de la teneur en composé à base de fer exprimée en équivalent Fe₂O₃, pour des briquettes crues ;
- l'évolution de la surface spécifique (SSA) BET en fonction de la teneur en composé à base de fer exprimée en équivalent Fe₂O₃, pour des briquettes cuites ayant été soumises à un traitement thermique (TT) de 1100°C pendant 20 minutes ; et
- l'évolution de la porosité en fonction de la teneur en composé à base de fer exprimée en équivalent Fe₂O₃, pour des briquettes cuites ayant été soumises à un traitement thermique (TTA) de 1100°C pendant 20 minutes.

Comme on peut le voir, ces évolutions de porosité et de surface spécifique diminuent légèrement de manière linéaire avec la teneur en composé à base de fer pour les briquettes crues et cuites. Les briquettes cuites présentent une surface spécifique inférieure à celles des briquettes crues, alors qu'elles présentent une porosité plus élevée pour des teneurs identiques en composé à base de fer.

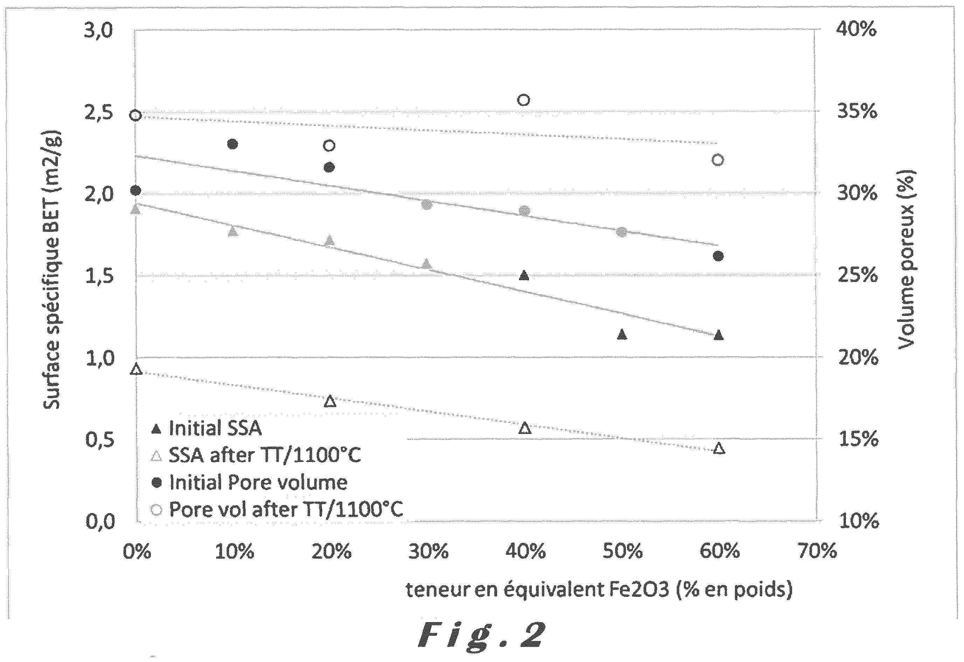

La figure 2 présente un graphique montrant :
- l'évolution de l'indice de Shatter test pour des briquettes crues, en fonction des teneurs en composé à base de fer exprimées en équivalent Fe₂O₃ ; et
- l'évolution de l'indice de Shatter test pour des briquettes cuites ayant été traitées thermiquement à une température (TT) de 1100°C pendant 20 minutes, en fonction des teneurs en composé à base de fer exprimé en équivalent Fe₂O₃.

Comme on peut le voir, les indices de Shatter tests sont inférieurs à 20 % pour des briquettes crues ayant des teneurs en composé à base de fer exprimées en équivalent Fe₂O₃ inférieures à 40%, alors que pour les briquettes cuites, tous les Shatter tests sont inférieurs à 10%, voire même 6%.

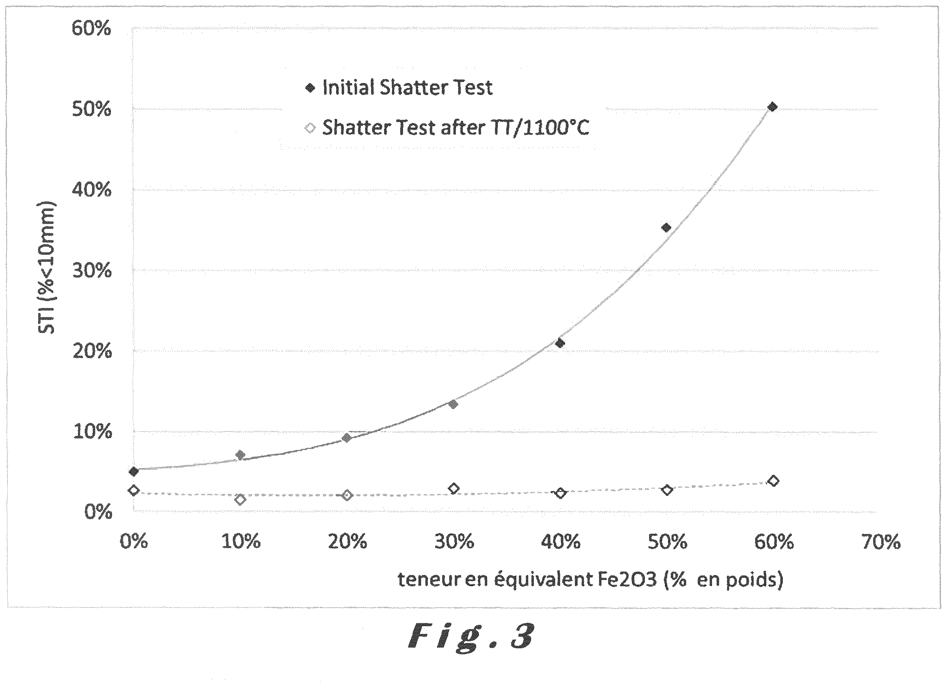

La figure 3 présente un graphique montrant l'évolution du rendement de composé à base de fer (l'oxyde de fer) converti en ferrite de calcium, en fonction de la teneur en oxyde de fer exprimée en équivalent Fe₂O₃, ainsi que les quantités d'oxyde de fer converties en ferrite mono-calcique et en ferrite di-calcique. Le traitement thermique est effectué en lit statique pendant 20 min à 1100°C dans un four tunnel sur 100 mm d'épaisseur de briquettes.

Comme on peut le voir, le rendement de conversion en ferrite de calcium commence à diminuer pour des teneurs en oxyde de fer exprimées en équivalent Fe₂O₃ supérieures à 40%. Le pourcentage de ferrites mono-calciques passe par un maximum pour des teneurs en oxyde de fer de 40%. Le pourcentage de formation de ferrites di-calciques diminue avec la teneur en oxyde de fer

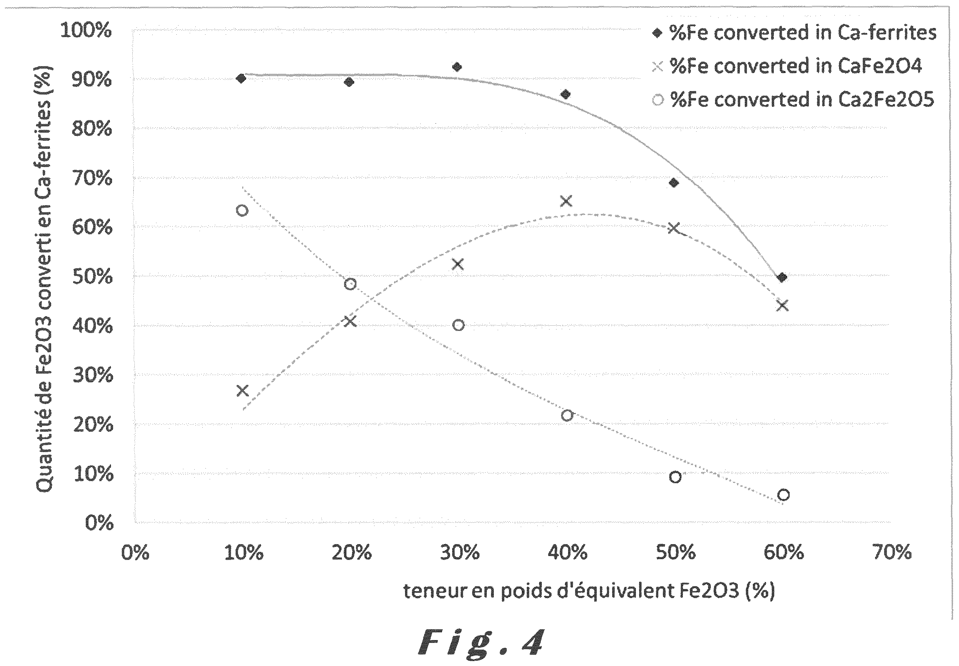

La figure 4 présente l'évolution de la teneur de ferrites de calcium exprimée en équivalent Fe₂O₃ dans les briquettes cuites en fonction de la teneur en oxyde de fer exprimée en équivalent Fe₂O₃ dans les briquettes crues avant traitement thermique.

Comme on peut le voir, les teneurs en ferrites de calcium dans les briquettes cuites augmentent avec la teneur en oxyde de fer dans les briquettes crues. Néanmoins cette évolution passe par un maximum à 50% en teneur de ferrites de calcium pour des teneurs en oxyde de fer dans les briquettes crues dans un intervalle compris entre 40 et 45%, pour diminuer ensuite à des teneurs en ferrites de calcium d'environ 40% pour des teneurs en oxyde de fer dans les briquettes crues de 60%.

Il est néanmoins possible de pousser le rendement de conversion d'oxyde de fer en ferrites de calcium au-delà de 90% et d'obtenir des teneurs en ferrites de calcium dans les briquettes cuites au-delà de 50%, même au-delà de 70% par exemple en augmentant la température du traitement thermique jusqu'à 1200°C ou en optimisant le broyage de la chaux vive de sorte à augmenter la proportion de particules de chaux vive inférieure à 90 µm, ou une combinaison de l'un et l'autre. Plusieurs exemples ont été réalisés et mesurée et présentés dans le tableau 1.

**Tableau 1.-**

| Exemples | % équivalent Fe₂O₃ | T° traitement thermique | Type de CaO | % conversion en ferrites de calcium | % de ferrites de calcium dans la briquette cuite | % de CaFe₂O₄ en poids de ferrites de calcium | % de Ca₂Fe₂O₅ en poids de ferrites de calcium |
|---|---|---|---|---|---|---|---|
| Ex. 2 | 20% | 1200°C | CaO < 2mm, dont 30% < 90µm | 95% | 31% | 7 | 93 |
| Ex. 3 | 30% | 1200°C | CaO < 2mm, dont 30% < 90µm | 98% | 47% | 22,5 | 77,5 |
| Ex. 4 | 40% | 1200°C | CaO < 2mm, dont 30% < 90µm | 98% | 58% | 55,3 | 44,7 |
| Ex. 5 | 50% | 1200°C | CaO < 2mm, dont 30% < 90µm | 97% | 74% | 39,4 | 60,6 |
| Ex. 6 | 50% | 1100°C | 50% de (CaO < 2mm, dont 30% < 90µm) + 50% de CaO < 90µm | 90% | 65% | 69,9 | 30,1 |
| Ex. 7 | 50% | 1100°C | 100% de CaO < 90µm | 96% | 73% | 47,2 | 52,8 |
| Ex. 8 | 50% | 1200°C | 50% de (CaO < 2mm, dont 30% < 90µm) + 50% de CaO < 90 µm | 99% | 76% | 43,9 | 56,1 |
| Ex. 9 | 50% | 1100°C | CaO < 2mm, dont 30% < 90µm | 61% | 43% | 82,6 | 17,4 |

Comme on peut le voir dans le tableau 1, il est possible d'optimiser les différents paramètres de pourcentage en oxyde de fer, température du traitement thermique, granulométrie de la chaux vive, de sorte à obtenir des rendements de conversion d'oxyde de fer en ferrite de calcium supérieurs à 70%, préférablement supérieurs à 80%, plus préférablement supérieurs à 90% avec au moins 40% en poids de ferrites de calcium sous forme de ferrites mono-calcique.

Dans l'exemple 4, des briquettes cuites ayant un rendement de conversion en ferrite de calcium de 98% et contenant 55,3% en poids de ferrite mono-calcique par rapport à la quantité de ferrites de calcium sont réalisées après traitement thermique à 1200°C pendant 20 minutes sur des briquettes crues contenant environ 40 % en poids d'hématite et 60 % en poids de chaux vive présentant un d₉₇ égal à 2 mm et un d₃₀ égale à 90µm (à savoir 30% de particules inférieures à 90 µm), à la présence de 0,25% en poids de stéarate de calcium près, par rapport au poids total des briquettes crues.

Dans l'exemple 6, des briquettes cuites ayant un rendement de conversion en ferrite de calcium de 90% et contenant 69,9% en poids de ferrite mono-calcique par rapport à la quantité de ferrites de calcium sont réalisées après traitement thermique à 1100°C pendant 20 minutes sur des briquettes crues contenant environ 50 % en poids d'hématite et 25 % en poids de chaux vive présentant un d₉₇ égal à 2 mm et un d₃₀ égal à 90µm (à savoir 30% de particules inférieures à 90 µm) et 25% en poids de chaux vive ayant un d₉₇ égal à 90µm, à la présence de 0,25% en poids de stéarate de calcium près, par rapport au poids total des briquettes crues.

Dans l'exemple 7, des briquettes cuites ayant un rendement de conversion en ferrite de calcium de 96% et contenant 47,2 % en poids de ferrite mono-calcique par rapport à la quantité de ferrites de calcium sont réalisées après traitement thermique à 1100°C pendant 20 minutes sur des briquettes crues contenant environ 50 % en poids d'hématite et 50 % en poids de chaux vive ayant un d₁₀₀ égal à 90 µm. Le rendement en ferrite mono-calcique peut être augmenté en diminuant la température du traitement thermique à 1100°C, à la présence de 0,25% en poids de stéarate de calcium près, par rapport au poids total des briquettes crues.

Dans l'exemple 8, des briquettes cuites ayant un rendement de conversion en ferrite de calcium de 99% et contenant 43,9 % en poids de ferrite mono-calcique par rapport à la quantité de ferrites de calcium sont réalisées après traitement thermique à 1200°C pendant 20 minutes sur des briquettes crues contenant environ 50 % en poids d'hématite et 25 % en poids de chaux vive présentant un d₉₇ égal à 2 mm et un d₃₀ égale à 90µm (à savoir 30% de particules inférieures à 90 µm) et 25% en poids de chaux vive ayant un d₉₇ égal à 90µm, à la présence de 0,25% en poids de stéarate de calcium près, par rapport au poids total des briquettes crues.

Dans l'exemple 9, des briquettes cuites ayant un rendement de conversion en ferrite de calcium de 61% et contenant 82,6 % en poids de ferrite mono-calcique par rapport à la quantité de ferrites de calcium sont réalisées après traitement thermique à 1100°C pendant 20 minutes sur des briquettes crues contenant environ 50 % en poids d'hématite et 50 % en poids de chaux vive présentant un d₉₇ égal à 2 mm et un d₃₀ égal à 90µm (à savoir 30% de particules inférieures à 90 µm). Le rendement en ferrite mono-calcique peut être augmenté en augmentant la quantité en poids de chaux vive ayant un d₁₀₀ égal à 90µm , à la présence de 0,25% en poids de stéarate de calcium près, par rapport au poids total des briquettes crues.

Il peut être avantageux dans un procédé de raffinage du métal d'avoir une quantité de ferrite mono-calcique supérieure à 40% en poids car le ferrite mono-calcique a un point de fusion inférieur au ferrite di-calcique, ce qui peut accélérer la dissolution des briquettes dans le laitier.

Il est également possible d'optimiser les différents paramètres de pourcentage en oxyde de fer, température du traitement thermique, granulométrie de la chaux vive, de sorte à obtenir des rendements de conversion d'oxyde de fer en ferrite de calcium supérieurs à 70%, préférablement supérieurs à 80%, plus préférablement supérieurs à 90% avec au moins 40% en poids de ferrites de calcium sous forme de ferrites di-calcique. Bien qu'il soit possible comme dans l'exemple 7 d'obtenir à 1100°C pendant 20 minutes, 52,8% de ferrites di-calciques par rapport à la quantité de ferrites de calcium, la plupart des autres exemples montrent que la formation d'au moins 40% de ferrites di-calciques par rapport à la quantité de ferrites de calcium est favorisée lorsque les briquettes sont soumises à un traitement thermique de 1200°C pendant 20 minutes.

Il peut être avantageux d'optimiser des paramètres du procédé de sorte à obtenir au moins 40% de ferrites di-calcique par rapport à la quantité en poids de ferrites de calcium, afin d'obtenir plus de ferrites di-calciques de une température de fusion plus élevée par rapport à la température de fusion du ferrite mono-calcique et ainsi minimiser le risque de fusion des briquettes dans le four.

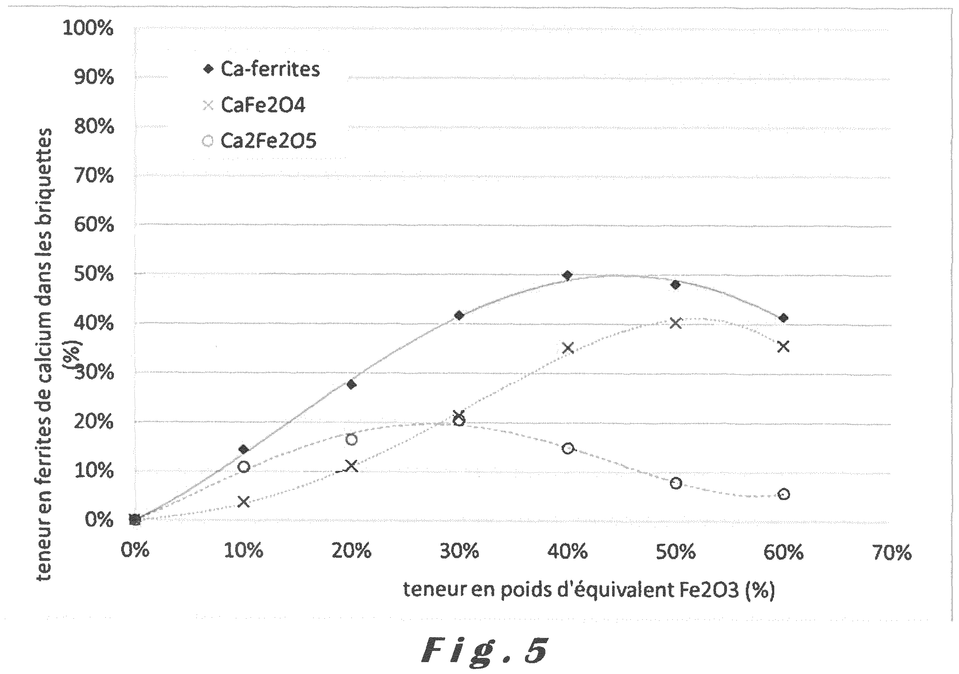

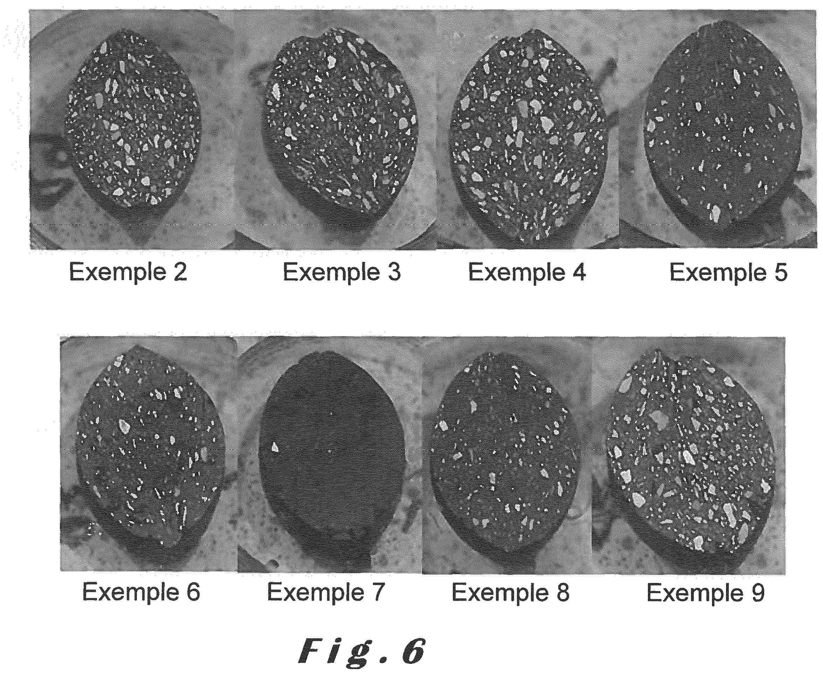

La figure 5 montre les photographies des coupes des briquettes des exemples 2 à 9. Les textures des briquettes cuites des exemples 2 à 9 ont été analysées par microscopie électronique à balayage couplée à l'analyse dispersive en énergie en effectuant une coupe de ces briquettes, en encapsulant ces briquettes dans une résine, et en polissant la surface de coupe. Ces analyses permettent de reconstruire une cartographie de la distribution de chaque élément dans une coupe des briquettes. Un logiciel d'analyse d'images permet de combiner les cartographies obtenues pour chaque élément et de mesurer la distribution de taille et la couverture relative de chaque élément.

Il a ainsi été montré pour les briquettes des exemples 2 à 9 que le ferrite de calcium forme une matrice (ou phase continue) dans laquelle sont dispersées des particules de chaux vive (phase discontinue). Une matrice de ferrite de calcium peut être obtenue après traitement thermique pendant 20 minutes à des températures comprises entre 900°C et 1200°C, préférablement entre 1050 et 1200°C de briquettes crues contenant au moins 20% en poids de particules de composé calco-magnésien, préférablement sous forme de chaux vive et au moins 20% en poids d'oxyde de fer ayant un d90 inférieur à 200µm, préférablement inférieur à 150µm, plus préférablement inférieur à 100µm et un d₅₀ inférieur à 50. Les tailles bidimensionnelles des particules de chaux dispersées dans la matrice sont calculées par un programme faisant la moyenne de la dimension la plus petite et la plus élevée de chaque particule de chaux vive dans la matrice de ferrites de calcium. Les particules sont classées en un premier groupe de particules dont la taille bidimensionnelle est inférieure à 63 µm et supérieure à la limite de détection de l'appareil de mesure, et un second groupe de particules dont la taille bidimensionnelle est supérieure à 63µm. Le tableau 2 ci-dessous montre, pour les briquettes des exemples 2 à 9, les couvertures relatives de la matrice de ferrite de calcium, des particules de chaux vives inférieures à 63 µm et des particules de chaux vive supérieures à 63 µm dans la section de coupe de chaque briquettes.

**Tableau 2.**

| | Ex 2 | Ex 3 | Ex 4 | Ex 5 | Ex 6 | Ex 7 | Ex 8 | Ex 9 |
|---|---|---|---|---|---|---|---|---|
| Matrice (% de couverture surfacique) | 41 | 50 | 52 | 72 | 70 | 83 | 80 | 54 |
| CaO < 63 µm (% de couverture surfacique) | 2 | 3 | 2 | 4 | 8 | 11 | 4 | 4 |
| CaO > 63 µm (% de couverture surfacique) | 56 | 47 | 46 | 24 | 22 | 6 | 17 | 42 |

Les pourcentages de couverture surfacique des particules de chaux vive supérieures à 63 µm sont inférieurs à 25% pour des briquettes cuites ayant des teneurs en ferrites de calcium supérieures à 60% en poids de la composition.

### Exemple 10.-

Des briquettes crues ont été réalisées avec 38,85 % en poids d'oxyde de fer sous forme de magnétite Fe₃O₄ ayant un d₉₇ de 150 µm et avec 60,9 % en poids de chaux vive présentant un d97 inférieur à 2 mm et un d₃₀ inférieur à 90µm ainsi que 0,25% en poids de stéarate de calcium, par rapport au poids de la briquette. Le traitement thermique a été effectué sur un lit statique de trois couches de briquettes pendant 20 min à 1100°C afin d'obtenir des briquettes cuites et le pourcentage en poids de fer converti en ferrite mono-calcique est de 8% alors que pourcentage de fer converti en ferrite di-calcique est de 82%.

### Exemple 11.-

Des briquettes crues ont été réalisées avec 39,9 %en poids d'oxyde de fer sous forme hématite Fe₂O₃ ayant un caractérisé par un d₁₀ de 0,5 µm, dso de 12,3 µm et d₉₀ de 35,7 µm et avec 59,85 % en poids de chaux vive présentant un d₉₇ inférieur à 2 mm et un d₃₀ inférieur à 90µm et 0,25 % en poids de stéarate de calcium par rapport au poids de la briquette. Les briquettes crues obtenues ont traitées thermiquement dans les mêmes conditions que dans l'exemple 17 afin d'obtenir des briquettes cuites. Dans ce cas, le pourcentage de fer converti en ferrite mono-calcique est de 65% en poids et le pourcentage de fer converti en ferrite di-calcique est de 24% en poids.

### Exemples 12 à 28.- prétraitement sous atmosphère modifiée contenant du CO₂ correspondant respectivement aux essais 1 à 17 au tableau 3.-

Dans les exemples qui suivent, les tests de résistance à la compression des briquettes ont été réalisés à l'aide d'un Pharmatron Multitest 50, dont l'une des plaques est équipée d'une pointe. La présence d'une pointe diminue la force nécessaire pour conduire à la rupture des briquettes par rapport à un test de résistance à la compression réalisé sans pointe.

10 briquettes crues contenant 59.85 % en poids de chaux vive similaire à celle utilisée à l'exemple 1, 39.9% de Fe₂O₃ de l'exemple 11 et 0.25% de stéarate de calcium sont caractérisées par ce test de résistance à la compression. La valeur moyenne est de 33 kg-force.

Plusieurs essais de prétraitement en faisant varier les paramètres tel qu'indiqué au tableau 4.- sont réalisés en enfournant à chaque fois 10 nouvelles briquettes crues dans un four à moufle électrique de 11 litres. Tous ces prétraitements sont réalisés entre 20 et 450°C sous un flux de 10 litres par minute d'un mélange de gaz formé de N₂, de H₂O et de CO₂. Les rampes de montée en température sont comprises entre 2 et 10°C/min.

Les concentrations volumiques en H2O dans le gaz sont comprises entre 3.9 et 20.1%. Les concentrations volumiques en CO2 dans le gaz sont comprises entre 0.9 et 9.1%.

A l'issue du prétraitement, pour chaque essai, les 10 briquettes sont caractérisées par le test de résistance à la compression. L'intégralité des 10 briquettes prétraitées est par ailleurs analysée pour déterminer les prises de poids relatives à l'hydratation dm(H2O)/m et à la carbonatation dm(CO2)/m. L'ensemble des résultats sont rassemblés dans le tableau 3.-.

Comme on peut le constater, au-delà de 2 %vol en CO₂ dans le gaz formant l'atmosphère modifiée, le prétraitement conduit à consolider les briquettes. A contrario, en deçà de 2 %vol en CO₂, les briquettes deviennent moins cohésives.

**Tableau 3.-**

| | prétraitement thermique | | | Caractérisation des biquettes prétraitées thermiquement | | | |
|---|---|---|---|---|---|---|---|
| | T (°C/min) | H2O (%vol) | CO2 (%vol) | dm(CO2)/m (%) | dm(H2O)/m(%) | crush test | évolution du crush test % |
| Essai 1 | 3.0 | 6.0 | 2.0 | 0.74 | 0.73 | 55 | 67% |
| Essai 2 | 9.0 | 6.0 | 2.0 | 0.43 | 0.44 | 50 | 52% |
| Essai 3 | 3.0 | 18.0 | 2.0 | 0.95 | 1.67 | 43 | 29% |
| Essai 4 | 9.0 | 18.0 | 2.0 | 0.42 | 1.03 | 33 | -1% |
| Essai 5 | 3.0 | 8.0 | 8.0 | 2.23 | 0.20 | 60 | 82% |
| Essai 6 | 9.0 | 6.0 | 8.0 | 1.26 | 0.24 | 49 | 48% |
| Essai 7 | 3.0 | 18.0 | 8.0 | 2.51 | 0.90 | 51 | 55% |
| Essai 8 | 9.0 | 18.0 | 8.0 | 1.08 | 0.87 | 44 | 33% |
| Essai 9 | 1,9 | 12.0 | 5.0 | 3.29 | 0.59 | 60 | 83% |
| Essai 10 | 10.1 | 12.0 | 5,0 | 0.77 | 0.69 | 46 | 40% |
| Essai 11 | 13.0 | 3.9 | 5.0 | 1.08 | 0.24 | 49 | 47% |
| Essai 12 | 6.0 | 20.1 | 5.0 | 1.21 | 1.07 | 49 | 49% |
| Essai 13 | 6.0 | 12.0 | 0.9 | 0.13 | 1.32 | 9 | -74% |
| Essai 14 | 6.0 | 12.0 | 9.1 | 1.82 | 0.46 | 60 | 81% |
| Essai 15 | 6.0 | 12.0 | 5.0 | 1.03 | 0.64 | 45 | 36% |
| Essai 16 | 6.0 | 12.0 | 5.0 | 1.11 | 0.51 | 49 | 48% |
| Essai 17 | 6.0 | 12.0 | 5.0 | 1.25 | 0,68 | 57 | 74% |

### Exemple comparatif 4.-

On a comparé les indices de Shatter test à la force de compression sur plusieurs échantillons de briquettes crues pour établir la corrélation entre l'indice de Shatter test et la force de compression. Les briquettes crues testés comprenaient de la chaux vive dont la taille de particules était comprise entre 0 et 3 mm avec différentes teneurs en oxyde de fer, de 0 à 60% en poids et différentes teneurs en lubrifiant, allant de 0,125 à 0,5 % en poids, par rapport au poids total des briquettes. Les paramètres du procédé de briquetage ont également été modifiées pour assurer que la population pour établir la corrélation était suffisamment large.

Il faut une force de compression supérieure à 144 kg, correspondant à 317,5 livres pour des briquettes présentant un indice de Shatter test inférieur à 10%.

Il est bien entendu que la présente invention n'est en aucune façon limitée aux formes de réalisations décrites ci-dessus et que bien des modifications peuvent y être apportées sans sortir du cadre des revendications annexées

## Revendications

1. Composition sous forme de briquettes cuites, comprenant un composé calco-magnésien vif, préférentiellement sous forme de chaux vive et un composé à base de fer sous forme de ferrite de calcium, **caractérisé en ce que** ledit ferrite de calcium forme une matrice dans laquelle sont dispersées des particules de composé calco-magnésien vif.

2. Composition sous forme de briquettes cuites selon la revendication 1, **caractérisé en ce que** lesdites particules de composé calco-magnésien vif ont une taille bidimensionnelle inférieure à 63 µm, observables par microscopie électronique à balayage couplées à l'analyse dispersive en énergie, dans une coupe de ladite briquette.

3. Composition sous forme de briquettes cuites selon la revendication 1 ou 2, **caractérisée en ce qu'**elle comprend en outre des particules de composé calco-magnésien vif de taille bidimensionnelle supérieure à 63 |im et inférieure à 5 mm, observables par microscopie électronique à balayage couplées à l'analyse dispersive en énergie, dans une coupe de ladite briquette.

4. Composition sous forme de briquettes cuites selon la revendication 3, dans laquelle lesdites particules de composé calco-magnésien vif de taille bidimensionnelle supérieure à 63 µm et inférieure à 5 mm, observables par microscopie électronique à balayage couplées à l'analyse dispersive en énergie, dans une coupe de ladite briquette couvrent au moins 20% de la surface de ladite coupe.

5. Composition sous forme de briquettes cuites selon la revendication 3 ou la revendication 4, dans laquelle lesdites particules de composé calco-magnésien vif de taille bidimensionnelle supérieure à 63 µm et inférieure à 5 mm, observables par microscopie électronique à balayage couplées à l'analyse dispersive en énergie, dans une coupe de ladite briquette couvrent au plus 60% de la surface de ladite coupe.

6. Composition sous forme de briquettes cuites selon la revendication 3, dans laquelle lesdites particules de composé calco-magnésien vif de taille bidimensionnelle supérieure à 63 µm et inférieure à 5 mm, observables par microscopie électronique à balayage couplées à l'analyse dispersive en énergie, dans une coupe de ladite briquette couvrent moins de 20%, préférentiellement moins de 10% de la surface de ladite coupe.

7. Composition sous forme de briquettes cuites selon l'une quelconque des revendications 1 à 6, dans laquelle au moins 70% en poids, préférentiellement 80% en poids, plus préférentiellement 90% en poids dudit composé à base de fer est sous forme de ferrites de calcium.

8. Composition sous forme de briquettes cuites selon l'une quelconque des revendications 1 à 7, **caractérisée en ce que** au moins 40% en poids, préférentiellement 50% en poids desdits ferrites de calcium sont sous forme de ferrite mono-calcique CaFe₂O₄.

9. Composition sous forme de briquettes cuites selon l'une quelconque des revendications 1 à 7, **caractérisée en ce que** au moins 40% en poids, préférentiellement 50% en poids desdits ferrites de calcium sont sous forme de ferrite di-calcique Ca₂Fe₂O5.

10. Composition sous forme de briquettes cuites selon l'une quelconque des revendications 1 à 9, **caractérisée en ce qu'**elle présente une surface spécifique BET supérieure ou égale à 0,4m²/g, de préférence supérieure ou égale à 0,6 m²/g, plus préférentiellement supérieure ou égale à 0,8 m²/g.

11. Composition sous forme de briquettes cuites selon l'une quelconque des revendications 1 à 10, **caractérisée en ce qu'**elle présente une porosité supérieure ou égale à 20%, préférentiellement supérieure ou égale à 22%, plus préférentiellement supérieure ou égale à 24%.

12. Composition sous forme de briquettes selon l'une quelconque des revendications 1 à 11, **caractérisée** en ce lesdites briquettes cuites présentent un indice de Shatter test inférieur à 10%, préférentiellement inférieure à 8%, avantageusement inférieure à 6%, ledit indice de Shatter test étant le pourcentage massique des fines inférieures à 10 mm générées à l'issue de 4 chutes de 2 m au départ de 10kg de produit, les fines étant quantifiées au moyen d'un tamisage au travers un crible à mailles carrées de 10 mm à l'issue des 4 chutes de 2 m.

13. Procédé de fabrication d'une composition sous forme de briquettes cuites selon l'une quelconque des revendications 1 à 12 comprenant les étapes de :
- mélange de particules de composé calco-magnésien, préférentiellement sous forme de particules de chaux vive avec des particules d'un composé à base de fer, préférentiellement sous forme d'oxyde de fer de sorte à obtenir un mélange homogène pulvérulent;
- alimentation d'une presse à rouleaux avec ledit mélange homogène pulvérulent,
- compression dans ladite presse à rouleaux dudit mélange homogène pulvérulent, avec obtention d'une composition calco-magnésienne sous forme de briquettes crues,
**caractérisé en ce que** lesdits rouleaux de la presse à rouleaux développent des vitesses linéaires en périphérie des rouleaux comprises entre 10 et 100 cm/s, préférentiellement comprises entre 20 et 80 cm/s, et des pressions linéraires comprises entre 60 et 160 kN/cm, préférentiellement comprises entre 80 et 140 kN/cm, et de manière encore plus préférentielle comprises entre 80 et 120 kN/cm, **en ce que** lesdites briquettes sont des briquettes cuites, le procédé comprenant en outre un traitement thermique desdites briquettes crues à une température comprise entre 1050°C et 1200°C pendant une durée comprise entre 5 et 25 minutes, préférentiellement comprise entre 10 et 20 minutes, ladite étape de mélange étant réalisée avec une fraction de particules de composé calco-magnésien présentant au moins 30% en poids des particules ≤ 90 µm, laquelle comprend au moins 20 % en poids d'équivalent CaO par rapport au poids total dudit mélange homogène pulvérulent, et avec au moins 20% en poids de particules de fer ayant un d₉₀ inférieur à 200µm, préférentiellement inférieur à 150 µm, plus préférentiellement inférieur à 130 µm et de la manière la plus préférentielle, inférieur à 100 µm.

14. Procédé selon la revendication 13, **caractérisé en ce qu'**il comprend en outre une étape de recyclage de fines de ladite étape de briquetage et/ou de ladite étape de traitement thermique et d'une étape d'introduction de ces fines dans ladite étape de mélange.

15. Procédé selon la revendication 13 ou 14, comprenant en outre un prétraitement des briquettes sous atmosphère modifiée contenant au moins 2% en volume de CO₂ et au plus 10 % en volume de CO₂ par rapport à ladite atmosphère modifiée.

16. Utilisation de la composition sous forme de briquettes cuites selon l'une quelconque des revendications 1 à 12 dans un procédé de raffinage d'un métal.

## Patentansprüche

1. Zusammensetzung in Form von gebrannten Briketts, umfassend eine gebrannte Calcium-Magnesium-Verbindung, vorzugsweise in Form von gebranntem Kalk und eine Verbindung auf Eisenbasis in Form von Calciumferrit, **dadurch gekennzeichnet, dass** das Calciumferrit eine Matrix bildet, in der Partikel einer gebrannten Calcium-Magnesium-Verbindung dispergiert sind.

2. Zusammensetzung in Form von gebrannten Briketts nach Anspruch 1, **dadurch gekennzeichnet, dass** die Partikel einer gebrannten Calcium-Magnesium-Verbindung eine zweidimensionale Größe kleiner als 63 µm besitzen, beobachtbar durch Rasterelektronenmikroskopie gekoppelt an die energiedispersive Analyse, in einem Schnitt des Briketts.

3. Zusammensetzung in Form von gebrannten Briketts nach Anspruch 1 oder 2, **dadurch gekennzeichnet, dass** sie weiter Partikel einer gebrannten Calcium-Magnesium-Verbindung einer zweidimensionalen Größe größer als 63 µm und kleiner als 5 mm umfasst, beobachtbar durch Rasterelektronenmikroskopie gekoppelt an die energiedispersive Analyse, in einem Schnitt des Briketts.

4. Zusammensetzung in Form von gebrannten Briketts nach Anspruch 3, wobei die Partikel einer gebrannten Calcium-Magnesium-Verbindung einer zweidimensionalen Größe größer als 63 µm und kleiner als 5 mm, beobachtbar durch Rasterelektronenmikroskopie gekoppelt an die energiedispersive Analyse, in einem Schnitt des Briketts mindestens 20 % der Oberfläche des Schnitts abdecken.

5. Zusammensetzung in Form von gebrannten Briketts nach Anspruch 3 oder Anspruch 4, wobei die Partikel einer gebrannten Calcium-Magnesium-Verbindung einer zweidimensionalen Größe größer als 63 µm und kleiner als 5 mm, beobachtbar durch Rasterelektronenmikroskopie gekoppelt an die energiedispersive Analyse, in einem Schnitt des Briketts höchstens 60 % der Oberfläche des Schnitts abdecken.

6. Zusammensetzung in Form von gebrannten Briketts nach Anspruch 3, wobei die Partikel einer gebrannten Calcium-Magnesium-Verbindung einer zweidimensionalen Größe größer als 63 µm und kleiner als 5 mm, beobachtbar durch Rasterelektronenmikroskopie gekoppelt an die energiedispersive Analyse, in einem Schnitt des Briketts weniger als 20 %, vorzugsweise weniger als 10 % der Oberfläche des Schnitts abdecken.

7. Zusammensetzung in Form von gebrannten Briketts nach einem der Ansprüche 1 bis 6, wobei mindestens 70 Gew.-%, vorzugsweise 80 Gew.-%, bevorzugter 90 Gew.-% der Verbindung auf Eisenbasis in Form von Calciumferriten sind.

8. Zusammensetzung in Form von gebrannten Briketts nach einem der Ansprüche 1 bis 7, **dadurch gekennzeichnet, dass** mindestens 40 Gew.-%, vorzugsweise 50 Gew.-% der Calciumferrite in Form von Monocalciumferrit CaFe₂O₄ sind.

9. Zusammensetzung in Form von gebrannten Briketts nach einem der Ansprüche 1 bis 7, **dadurch gekennzeichnet, dass** mindestens 40 % Gew.-%, vorzugsweise 50 % Gew.-% der Calciumferrite in Form von Dicalciumferrit Ca₂Fe₂O₅ sind.

10. Zusammensetzung in Form von gebrannten Briketts nach einem der Ansprüche 1 bis 9, **dadurch gekennzeichnet, dass** sie eine spezifische Oberfläche BET aufweist, die größer als oder gleich 0,4 m²/g, vorzugsweise größer als oder gleich 0,6 m²/g, bevorzugter größer als oder gleich 0,8 m²/g ist.

11. Zusammensetzung in Form von gebrannten Briketts nach einem der Ansprüche 1 bis 10, **dadurch gekennzeichnet, dass** sie eine Porosität aufweist, die größer als oder gleich 20 %, vorzugsweise größer als oder gleich 22 %, bevorzugter größer als oder gleich 24 % ist.

12. Zusammensetzung in Form von Briketts nach einem der Ansprüche 1 bis 11, **dadurch gekennzeichnet, dass** die gebrannten Briketts einen Shatter-Test-Index aufweisen, der kleiner als 10 %, vorzugsweise kleiner als 8 %, vorteilshafterweise kleiner als 6 % ist, wobei der Shatter-Test-Index der Massenanteil der Feinteile kleiner als 10 mm ist, die nach 4 Fällen von 2 m ausgehend von einer Produktmenge von 10 kg erzeugt werden, wobei die Feinteile mithilfe einer Siebung durch ein Sieb mit quadratischen Maschen von 10 mm nach den 4 Fällen von 2 m quantifiziert werden.

13. Verfahren zur Herstellung einer Zusammensetzung in Form von gebrannten Briketts nach einem der Ansprüche 1 bis 12, umfassend die folgenden Schritte:
- Mischen von Partikeln einer gebrannten Calcium-Magnesium-Verbindung, vorzugsweise in Form von Partikeln von gebranntem Kalk mit Partikeln einer Verbindung auf Eisenbasis, vorzugsweise in Form von Eisenoxid, um eine pulverförmige homogene Mischung zu erhalten;
- Speisen einer Walzenpresse mit der pulverförmigen homogenen Mischung,
- Verdichten der pulverförmigen homogenen Mischung in der Walzenpresse, mit Erhalten einer Calcium-Magnesium-Zusammensetzung in Form von rohen Briketts,
**dadurch gekennzeichnet, dass** die Walzen der Walzenpress am Rande der Walzen lineare Geschwindigkeiten zwischen 10 und 100 cm/s, vorzugsweise zwischen 20 und 80 cm/s, und lineare Drücke zwischen 60 und 160 kN/cm, vorzugsweise zwischen 80 und 140 kN/cm, und auf noch bevorzugtere Weise zwischen 80 und 120 kN/cm entwickeln, dadurch, dass die vorgenannten Briketts in einem weiteren Prozessschritt gebrannt werden, wobei das Verfahren hierzu eine thermische Behandlung der rohen Briketts bei einer Temperatur zwischen 1050 °C und 1200 °C während einer Dauer zwischen 5 und 25 Minuten, vorzugsweise zwischen 10 und 20 Minuten umfasst, wobei der Mischschritt mit einem Anteil von Partikeln einer gebrannten Calcium-Magnesium-Verbindung durchgeführt wird, der mindestens 30 Gew.-% der Partikel ≤ 90 µm aufweist, der mindestens 20 äquivalente Gew.-% von CaO in Bezug auf das Gesamtgewicht der pulverformigen homogenen Mischung umfasst, und mit mindestens 20 Gew.-% Eisenpartikel, die einen d₉₀ kleiner als 200 µm, vorzugsweise kleiner als 150 µm, bevorzugter kleiner als 130 µm, und auf besonders bevorzugte Weise kleiner als 100 µm besitzen.

14. Verfahren nach Anspruch 13, **dadurch gekennzeichnet, dass** es weiter einen Rückführschritt von Feinteilen des Brikettierungsschritts und/oder des Schritts der thermischen Behandlung und einen Einbringschritt dieser Feinteile im Mischschritt umfasst.

15. Verfahren nach Anspruch 13 oder 14, weiter umfassend eine Vorbehandlung der Briketts unter modifizierter Atmosphäre, die mindestens 2 Vol.-% CO₂ und höchstens 10 % Vol.-% CO₂ in Bezug auf die modifizierte Atmosphäre enthält.

16. Verwendung der Zusammensetzung in Form von gebrannten Briketts nach einem der Ansprüche 1 bis 12 in einem Metallveredelungsverfahren.

## Claims

1. Composition in the form of thermally treated briquettes, comprising a "quick" calcium-magnesium compound, preferably in the form of quicklime and an iron-based compound in the form of calcium ferrite, **characterized in that** said calcium ferrite forms a matrix in which particles of "quick" calcium-magnesium compound are dispersed.

2. Composition in the form of thermally treated briquettes according to claim 1, **characterized in that** said particles of "quick" calcium-magnesium compound have a two-dimensional size under 63 µm, observable by scanning electron microscopy coupled to energy dispersive analysis, in a section of said briquette.

3. Composition in the form of thermally treated briquettes according to claim 1 or 2, **characterized in that** it further comprises particles of "quick" calcium-magnesium compound of two-dimensional size above 63 µm and under 5 mm, observable by scanning electron microscopy coupled to energy dispersive analysis, in a section of said briquette.

4. Composition in the form of thermally treated briquettes according to claim 3, in which said particles of "quick" calcium-magnesium compound of two-dimensional size above 63 µm and under 5 mm, observable by scanning electron microscopy coupled to energy dispersive analysis, in a section of said briquette cover at least 20% of the area of said section.

5. Composition in the form of thermally treated briquettes according to claim 3 or claim 4, in which said particles of "quick" calcium-magnesium compound of two-dimensional size above 63 µm and under 5 mm, observable by scanning electron microscopy coupled to energy dispersive analysis, in a section of said briquette cover at most 60% of the surface area of said section.

6. Composition in the form of thermally treated briquettes according to claim 3, in which said particles of "quick" calcium-magnesium compound of two-dimensional size above 63 µm and under 5 mm, observable by scanning electron microscopy coupled to energy dispersive analysis, in a section of said briquette cover less than 20%, preferably less than 10% of the surface area of said section.

7. Composition in the form of thermally treated briquettes according to any one of claims 1 to 6, in which at least 70 wt%, preferably 80 wt%, more preferably 90 wt% of said iron-based compound is in the form of calcium ferrites.

8. Composition in the form of thermally treated briquettes according to any one of claims 1 to 7, **characterized in that** at least 40 wt%, preferably 50 wt% of said calcium ferrites are in the form of monocalcium ferrite CaFe₂O₄.

9. Composition in the form of thermally treated briquettes according to any one of claims 1 to 7, **characterized in that** at least 40 wt%, preferably 50 wt% of said calcium ferrites are in the form of dicalcium ferrite Ca₂Fe₂O₅.

10. Composition in the form of thermally treated briquettes according to any one of claims 1 to 9, **characterized in that** it has a BET specific surface area greater than or equal to 0.4 m²/g, preferably greater than or equal to 0.6 m²/g, more preferably greater than or equal to 0.8 m²/g.

11. Composition in the form of thermally treated briquettes according to any one of claims 1 to 10, **characterized in that** it has porosity greater than or equal to 20%, preferably greater than or equal to 22%, more preferably greater than or equal to 24%.

12. Composition in the form of thermally treated briquettes according to any one of claims 1 to 11, **characterized in** this said thermally treated briquettes have a shatter index below 10%, preferably below 8%, advantageously below 6%, said shatter test index being the percentage by weight of fines under 10 mm generated after 4 drops from 2 m starting from 10kg of product, the fines being quantified by sieving through a screen with square mesh of 10 mm after 4 drops from 2 m.

13. Method for manufacturing a composition in the form of thermally treated briquettes according to any one of claims 1 to 12 comprising the steps of:
- mixing particles of calcium-magnesium compound, preferably in the form of particles of quicklime with particles of an iron-based compound, preferably in the form of iron oxide so as to obtain a pulverulent homogeneous mixture;
- feeding a roller press with said pulverulent homogeneous mixture,
- compressing said pulverulent mixture in said roller press, with obtaining a calcium-magnesium composition in the form of green briquettes.
**characterized in that** the rollers of said roller press develop linear speeds at the periphery of the rollers between 10 and 100 cm/s, preferably between 20 and 80 cm/s, and linear pressures between 60 and 160 kN/cm, preferably between 80 and 140 kN/cm, and even more preferably between 80 and 120 kN/cm and **in that** said briquettes are thermally treated briquettes, the method further comprising a thermal treatment of said green briquettes at a temperature between 1050°C and 1200°C for a time between 5 and 25 minutes, preferably between 10 and 20 minutes said mixing step being carried out with a fraction of particles of calcium-magnesium compound having at least 30 wt% of the particles ≤ 90 µm, which comprises at least 20 wt% of CaO equivalent relative to the total weight of said pulverulent homogeneous mixture, and with at least 20 wt% of iron particles having a d₉₀ under 200µm, preferably under 150 µm, more preferably under 130 µm and even more preferably under 100 µm.

14. Method according to claim 13, **characterized in that** it further comprises a step of recycling fines from said briquetting step and/or from said step of thermal treatment and a step of introducing these fines in said mixing step.

15. Method according to claim 13 or 14, further comprising pretreatment of the briquettes under modified atmosphere containing at least 2 vol% of CO₂ and at most 10 vol% of CO₂ relative to said modified atmosphere.

16. Use of the composition in the form of thermally treated briquettes according to any one of claims 1 to 12 in a metal refining process.
